# EUROPEAN PATENT APPLICATION

(11) **EP 4 439 278 A1**
(43) Date of publication of application: **02.10.2024**
(21) Application number: 21967701.0
(22) Date of filing: 16.12.2021
(51) Int. Cl.: G06F 8/65, G06F 8/71

(54) **UPGRADE METHOD, APPARATUS AND SYSTEM**

(71) Applicant: Huawei Technologies Co., Ltd., Shenzhen, Guangdong 518129 (CN)
(72) Inventor: JIANG, Haiying, Shenzhen, Guangdong 518129 (CN); WANG, Yong, Shenzhen, Guangdong 518129 (CN); ZHOU, Zheng, Shenzhen, Guangdong 518129 (CN); LI, Dongning, Shenzhen, Guangdong 518129 (CN)
(74) Representative: Maiwald GmbH
(86) International application number: PCT/CN2021/138910
(87) International publication number: WO 2023/108566

(57) **Abstract**

An upgrade method, an apparatus, and a system are provided, and relate to the field of internet of vehicles technologies. The method includes: obtaining status information of a terminal device, where the status information includes an identification result of a first user and/or an identification result of a second user, the first user is an owner of the terminal device, and the second user is an authorized user of the terminal device; and performing an upgrade operation of the terminal device based on the status information. The method helps flexibly implement an OTA upgrade process of the terminal device in a multi-user scenario, and ensures use experience of different users.

## Description

### TECHNICAL FIELD

This application relates to the field of internet of vehicles technologies, and in particular, to an upgrade method, an apparatus, and a system.

### BACKGROUND

With continuous development of the vehicle industry, vehicles are increasingly electric, intelligent, networked, and shared, and therefore software functions of the vehicles become increasingly complex. Software of the vehicles is updated faster than hardware of the vehicles.

Currently, performing an upgrade operation on software of a vehicle in a remote wireless manner by using an over-the-air (Over-the-Air, OTA) technology has become a necessary function of an intelligent connected vehicle. A procedure of performing the upgrade operation on the software of the vehicle is usually implemented by a vehicle owner (namely, an owner of the vehicle) without considering another user other than the vehicle owner. The another user does not have permission to perform the upgrade operation on the software of the vehicle, or does not know how to process upgrade operation information. This affects driving experience of the another user, and also poses great safety risks.

Therefore, how to implement the OTA of the intelligent connected vehicle in a multi-user scenario is still an important problem that needs to be urgently resolved.

### SUMMARY

This application provides an upgrade method, an apparatus, and a system, to help flexibly implement OTA upgrade of an intelligent connected vehicle in a multi-user scenario, ensure driving experience of a vehicle user, and improve driving safety.

According to a first aspect, an embodiment of this application provides an upgrade method. The method may be performed by an OTA server. The OTA server may be implemented as a communication apparatus. The communication apparatus may be an independent device, or may be a chip or a component in a device, or may be software, and may be deployed on a cloud, a roadside device, a remote server, a local server, or the like. A product form and a deployment manner of the OTA server are not limited in this application.

The upgrade method may include: obtaining status information of a terminal device, where the status information includes an identification result of a first user and/or an identification result of a second user, the first user is an owner of the terminal device, and the second user is an authorized user of the terminal device; and performing an upgrade operation of the terminal device based on the status information.

According to the foregoing method, the OTA server may flexibly perform the upgrade operation of the terminal device based on the identification result of the first user and/or the identification result of the second user, including but not limited to determining OTA content, downloading an OTA upgrade package, installing the OTA upgrade package, activating the OTA upgrade package, and the like, to implement OTA of an intelligent connected vehicle in a multi-user scenario, and ensure experience of using the terminal device by different users.

For example, the terminal device may be a vehicle, the first user may be a vehicle owner of the vehicle, and the second user is an authorized user of the vehicle other than the vehicle owner. According to the upgrade method in this embodiment of this application, the OTA server may flexibly determine a specific implementation policy of an OTA upgrade process of the terminal device based on an identification result of the vehicle owner and/or an identification result of the authorized user, for example, determine how to deliver upgrade operation information of the terminal device, to implement the OTA upgrade process of the vehicle. OTA of the vehicle is implemented in a multi-user scenario, driving experience of different users of the vehicle is ensured, and driving safety is improved.

It may be understood that, in this embodiment of this application, if the owner of the terminal device is an enterprise user rather than an individual user, the first user may also be understood as a specific user specified by the enterprise user, for example, a management user, and the second user may be understood as an authorized user other than the management user that is specified by the enterprise user.

With reference to the first aspect, in a possible implementation, a manner of obtaining the status information of the terminal device includes one or more of the following: obtaining the status information based on use management information of the terminal device; receiving first indication information from the terminal device, where the first indication information indicates the identification result of the first user and/or the identification result of the second user; or receiving second indication information from the first user, where the second indication information indicates the identification result of the first user and/or the identification result of the second user.

According to the foregoing method, the OTA server may flexibly obtain the status information of the terminal device in a plurality of manners, to consider different cases as comprehensively as possible, to help determine the specific implementation policy of the OTA upgrade process of the terminal device.

Generally, an owner of a terminal device has all rights to dispose of the terminal device, and is most familiar with how to implement an OTA upgrade process of the terminal device. In this embodiment of this application, the OTA server may determine, based on an association relationship between the first user and the terminal device, how to perform the upgrade operation on the terminal device, to ensure smooth implementation of the upgrade operation of the terminal device. This embodiment of this application may include the following examples.

In an example, the identification result of the first user may include that the first user exists in the terminal device, or the first user exists at a preset location of the terminal device; and the performing an upgrade operation of the terminal device based on the status information includes: sending the upgrade operation information of the terminal device to the terminal device. In this way, the first user in the terminal device or at the preset location of the terminal device may perform subsequent related processing based on the upgrade operation information received by the terminal device, to complete smooth implementation of the OTA upgrade process of the terminal device.

It should be noted that, in this embodiment of this application, the preset location of the terminal device may be understood differently in different scenarios. For example, when the terminal device is a vehicle in an internet of vehicles scenario, the preset location of the terminal device may be a preset location inside the terminal device, for example, a driver position. In a mobile service scenario (including a remote driving scenario), the preset location of the terminal device may be an external location associated with the terminal device, for example, a location that is outside the terminal device and at which the terminal device may be remotely controlled or monitored. This is not limited in this embodiment of this application.

In another example, the identification result of the first user may include that the first user does not exist in the terminal device, or the first user exists in the terminal device and the first user is not at a preset location of the terminal device; and the performing an upgrade operation of the terminal device based on the status information includes: sending the upgrade operation information of the terminal device to the first user.

Therefore, when the first user is not in the terminal device or is not at the preset location of the terminal device, the OTA server may send the upgrade operation information of the terminal device to the first user, so that the first user processes the upgrade operation information. In this way, other users of the terminal device do not need to know how to process the upgrade operation information of the terminal device, do not need to have the permission to process this information, and can use the terminal device with full care. This ensures use experience of the other users.

In another example, the identification result of the second user may include that the second user exists in the terminal device; and the performing an upgrade operation of the terminal device based on the status information may include: sending the upgrade operation information of the terminal device to the first user or the terminal device.

Therefore, when the first user authorizes the second user to use the terminal device, to ensure use experience of the second user and smooth implementation of the OTA upgrade process of the terminal device, when the OTA upgrade process of the terminal device needs to be implemented, the OTA server may determine that the first user or the terminal device is a receive end of the upgrade operation information of the terminal device, and the first user controls the OTA upgrade process of the terminal device as much as possible, to ensure that other users of the terminal device do not need to know how to process the upgrade operation information of the terminal device, do not need to have the permission to process this information, and can use the terminal device with full care. This ensures use experience of the other users.

It should be noted that, in this embodiment of this application, the first user may also authorize permission to the second user to process the upgrade operation information of the terminal device. Correspondingly, when performing determining, the OTA server may also use the second user as one of receive ends of the upgrade operation information based on authorization information of the first user for the second user, so that the second user performs the upgrade operation of the terminal device through interaction with the second user.

With reference to the first aspect, in a possible implementation, the upgrade method may further include: sending third indication information to the terminal device, where the third indication information indicates the identification result of the first user and/or the identification result of the second user.

According to the foregoing method, the OTA server may further send the third indication information to the terminal device to indicate the identification result of the first user and/or the identification result of the second user, so that the terminal device may also determine, based on the identification result, how to implement the upgrade operation of the terminal device. For example, the terminal device may output the upgrade operation information, and a corresponding user on the terminal device side implements the OTA upgrade process of the terminal device based on the upgrade operation information. Alternatively, the terminal device may send the upgrade operation information to the first user, and the first user implements the OTA upgrade process of the terminal device based on the upgrade operation information. Alternatively, after obtaining authorization from the first user, the terminal device may send the upgrade operation information to the second user, and the second user implements the OTA upgrade process of the terminal device based on the upgrade operation information. Therefore, the terminal device may flexibly perform the OTA upgrade operation according to different cases, to ensure use experience of different users.

According to a second aspect, an embodiment of this application provides an upgrade method. The method may be performed by an OTA control unit. The OTA control unit may be implemented as a communication apparatus. The communication apparatus may be an independent device, or may be a chip or a component in a device, or may be software. The communication apparatus may be configured in a terminal device. For example, the communication apparatus may be an application, and may be installed or run in a chip or a component of the terminal device, or in an intelligent device like a mobile phone or a tablet computer inside the terminal device. Alternatively, the communication apparatus may be a software module, and may be deployed in each electronic control unit (electronic control unit, ECU) of the terminal device. Alternatively, the communication apparatus may be a newly added hardware module in the terminal device. Related determining logic or an algorithm may be configured in the hardware module, and the hardware module may serve as an ECU in the terminal device to transfer information to another ECU through an internal communication network, to implement the upgrade method in this embodiment of this application. A product form, a deployment manner, or the like of the OTA control unit is not limited in this embodiment of this application.

In an optional implementation, the terminal device may be a vehicle. The communication apparatus corresponding to the OTA control unit may be an internet of vehicles intelligent terminal (Telematics BOX, T-BOX), also referred to as a telematics control unit (Telematics Control Unit, TCU), and may integrate functional modules such as a global positioning system (Global Positioning System, GPS), an external communication interface, an ECU, a microcontroller, a mobile communication unit, and a memory. The T-Box may be internally connected to an in-vehicle bus (namely, an internal communication network of the terminal device, for example, a CAN bus), and externally may implement, by using a cloud platform, information exchange between a vehicle terminal, a handheld device, a roadside unit (Roadside Unit, RSU), and a public network that implements communication by using V2V, V2R, V2H, V2S, or the like.

The upgrade method may include: receiving upgrade operation information of the terminal device from an OTA server; obtaining status information of the terminal device, where the status information includes an identification result of a first user and/or an identification result of a second user, the first user is an owner of the terminal device, and the second user is an authorized user of the terminal device; and performing an upgrade operation of the terminal device based on the status information and the upgrade operation information.

According to the foregoing method, after receiving the upgrade operation information, the OTA control unit may determine, based on the status information of the terminal device, how to process the upgrade operation information, to flexibly perform the OTA upgrade operation of the terminal device, and implement OTA of an intelligent connected vehicle in a multi-user scenario. For example, when the terminal device is a vehicle, the first user is a vehicle owner of the vehicle, and the second user is an authorized user of the vehicle other than the vehicle owner. According to the upgrade method in this embodiment of this application, the OTA control unit may flexibly determine a specific implementation policy of an OTA upgrade process of the terminal device based on an identification result of the vehicle owner and/or an identification result of the authorized user, for example, determine how to output upgrade operation information of the terminal device, to implement the OTA upgrade process of the vehicle. OTA of the vehicle can be implemented in a multi-user scenario, driving experience of different users of the vehicle can be ensured, and driving safety is improved.

With reference to the second aspect, in a possible implementation, a manner of obtaining the status information of the terminal device includes one or more of the following: receiving first indication information from the OTA server, where the first indication information indicates the identification result of the first user and/or the identification result of the second user; obtaining the identification result of the first user and/or the identification result of the second user based on use management information of the terminal device; obtaining the identification result of the first user and/or the identification result of the second user based on a sensing result of the terminal device; or obtaining the identification result of the first user and/or the identification result of the second user based on input information received by the terminal device.

According to the foregoing method, the OTA control unit may flexibly obtain the status information of the terminal device in a plurality of manners, to consider different cases as comprehensively as possible, to help determine the specific implementation policy of the OTA upgrade process of the terminal device.

Generally, an owner of a terminal device has all rights to dispose of the terminal device, and is most familiar with how to implement an OTA upgrade process of the terminal device. In this embodiment of this application, the OTA control unit may determine, based on an association relationship between the first user and the terminal device, how to perform the upgrade operation on the terminal device, to ensure smooth implementation of the upgrade operation of the terminal device. This embodiment of this application may include the following examples.

In an example, the identification result of the first user may include that the first user exists in the terminal device, or the first user exists at a preset location of the terminal device; and the performing an upgrade operation of the terminal device based on the status information and the upgrade operation information includes: sending second indication information to a first device associated with the first user in the terminal device, where the second indication information indicates to output the upgrade operation information on the first device. In a possible implementation, the sending second indication information to a first device associated with the first user in the terminal device includes: sending the second indication information to the first device via a second device in the terminal device. In this way, the first user in the terminal device or at the preset location of the terminal device may perform subsequent related processing based on the upgrade operation information received by the terminal device, to complete smooth implementation of the OTA upgrade process of the terminal device. For related explanations of the preset location of the terminal device, refer to the foregoing related descriptions. Details are not described herein again.

In another example, the identification result of the first user may include that the first user does not exist in the terminal device, or the first user exists in the terminal device and the first user is not at a preset location of the terminal device; and the performing an upgrade operation of the terminal device based on the status information and the upgrade operation information includes: sending the upgrade operation information of the terminal device to the first user.

Therefore, when the first user does not exist in the terminal device or the first user does not exist at the preset location of the terminal device, the OTA control unit may send the upgrade operation information of the terminal device to the first user, so that the first user processes the upgrade operation information. In this way, other users of the terminal device do not need to know how to process the upgrade operation information of the terminal device, do not need to have the permission to process this information, and can use the terminal device with full care. This ensures use experience of the other users.

In another example, the identification result of the second user may include that the second user exists in the terminal; and the performing an upgrade operation of the terminal device based on the status information and the upgrade operation information includes: sending the upgrade operation information to the first user or the terminal device.

Therefore, when the first user authorizes the second user to use the terminal device, to ensure use experience of the second user and smooth implementation of the OTA upgrade process of the terminal device, when the OTA upgrade process of the terminal device needs to be implemented, the OTA control unit may determine that the first user or the terminal device is a receive end of the upgrade operation information of the terminal device, and the first user controls the OTA upgrade process of the terminal device as much as possible, to ensure that other users of the terminal device do not need to know how to process the upgrade operation information of the terminal device, do not need to have the permission to process this information, and can use the terminal device with full care. This ensures use experience of the other users.

It should be noted that, in this embodiment of this application, the first user may also authorize permission to the second user to process the upgrade operation information of the terminal device. Correspondingly, when performing determining, the OTA control unit may also use the second user as one of receive ends of the upgrade operation information based on authorization information of the first user for the second user, so that the second user performs the upgrade operation of the terminal device through interaction with the second user.

According to a third aspect, an embodiment of this application provides an upgrade method. The method may be applied to a first human machine interface (Human Machine Interface, HMI), the first HMI may be, for example, an HMI of a terminal device, and the method may include: receiving upgrade operation information; outputting the upgrade operation information; obtaining input information in response to the upgrade operation information, where the input information is used to authorize a second HMI to output the upgrade operation information; and sending output control information based on the input information, where the output control information indicates to output the upgrade operation information on the second HMI.

According to the foregoing method, the first HMI of the terminal device may output the upgrade operation information and receive the input information in response to the upgrade operation information, to send the output control information based on the input information, so that the upgrade operation information is output on the second HMI, and a user on the second HMI side performs an upgrade operation of the terminal device.

It may be understood that, in this embodiment of this application, during specific implementation, the first HMI may have only an input/output function. In an example, the output control information may be the upgrade operation information, and that the first HMI sends the output control information based on the input information may be that, for example, the first HMI sends the upgrade operation information to the second HMI via an OTA control unit of the terminal device. In another example, the output control information is control information that indicates to output the upgrade operation information on the second HMI. That the first HMI sends the output control information based on the input information may be that, for example, the first HMI sends the output control information to the second HMI via an OTA control unit of the terminal device. Alternatively, in another embodiment, the first HMI may directly send the upgrade operation information or the output control information to the second HMI, and synchronize related information of the sending operation with an OTA control unit of the terminal device, so that the OTA control unit may learn a route of the upgrade operation information or the output control information. A transmission manner of the upgrade operation information or the output control information is not limited in this embodiment of this application.

It may be understood that, in this embodiment of this application, during specific implementation, the first HMI of the terminal device may be an HMI in the terminal device, or may be an external HMI associated with the terminal device, for example, an HMI that is outside the terminal device and that may remotely control or monitor the terminal device. This is not limited in this embodiment of this application. Similarly, the second HMI may be an HMI in the terminal device, or may be an external HMI associated with the terminal device. For example, the first HMI may be an HMI in the terminal device, and the second HMI is an HMI other than the first HMI in the terminal device. Alternatively, for example, the first HMI may be an HMI in the terminal device, and the second HMI is an external HMI associated with the terminal device. For another example, the first HMI is an external HMI associated with the terminal device, and the second HMI is an HMI in the terminal device. For another example, both the first HMI and the second HMI are external HMIs associated with the terminal device.

According to a fourth aspect, an embodiment of this application provides an upgrade method. The method may be applied to an intelligent terminal of a first user, the first user is an owner of a terminal device, and the method includes: receiving upgrade operation information from an OTA server or the terminal device; outputting the upgrade operation information; obtaining input information in response to the upgrade operation information, where the input information is used to authorize another device other than the intelligent terminal to perform an upgrade operation of the terminal device; and sending operation control information to the OTA server or the terminal device based on the input information, where the operation control information indicates the another device to perform the upgrade operation of the terminal device. For example, the operation control information may be the input information, or the operation control information may be control information that indicates another device to perform the upgrade operation of the terminal device.

According to the foregoing method, the intelligent terminal of the first user may output the upgrade operation information and receive the input information in response to the upgrade operation information, to send the operation control information to the OTA server or the terminal device, so that the OTA server or the terminal device performs determining based on the operation control information, and determines a receive end of the upgrade operation information of the terminal device, to flexibly perform the upgrade operation of the terminal device.

According to a fifth aspect, an embodiment of this application provides a communication apparatus, including: an obtaining unit, configured to obtain status information of a terminal device, where the status information includes an identification result of a first user and/or an identification result of a second user, the first user is an owner of the terminal device, and the second user is an authorized user of the terminal device; and an upgrade control unit, configured to perform an upgrade operation of the terminal device based on the status information.

With reference to the fifth aspect, in a possible implementation, a manner of obtaining the status information of the terminal device by the obtaining unit includes one or more of the following: obtaining the status information based on use management information of the terminal device; receiving first indication information from the terminal device by using a communication unit, where the first indication information indicates the identification result of the first user and/or the identification result of the second user; or receiving second indication information from the first user by using a communication unit, where the second indication information indicates the identification result of the first user and/or the identification result of the second user.

With reference to the fifth aspect, in a possible implementation, the identification result of the first user includes that the first user exists in the terminal device, or the first user exists at a preset location of the terminal device; and the upgrade control unit is configured to send upgrade operation information of the terminal device to the terminal device by using the communication unit.

With reference to the fifth aspect, in a possible implementation, the identification result of the first user includes that the first user does not exist in the terminal device, or the first user exists in the terminal device and the first user is not at a preset location of the terminal device; and the upgrade control unit is configured to send upgrade operation information of the terminal device to the first user by using the communication unit.

With reference to the fifth aspect, in a possible implementation, the identification result of the second user includes that the second user exists in the terminal device; and the upgrade control unit is configured to send upgrade operation information of the terminal device to the first user or the terminal device by using the communication unit.

With reference to the fifth aspect, in a possible implementation, the upgrade control unit is further configured to send third indication information to the terminal device by using the communication unit, where the third indication information indicates the identification result of the first user and/or the identification result of the second user.

According to a sixth aspect, an embodiment of this application provides a communication unit, configured to receive upgrade operation information of a terminal device from an OTA server; an obtaining unit, configured to obtain status information of the terminal device, where the status information includes an identification result of a first user and/or an identification result of a second user, the first user is an owner of the terminal device, and the second user is an authorized user of the terminal device; and an upgrade control unit, configured to perform an upgrade operation of the terminal device based on the status information and the upgrade operation information.

With reference to the sixth aspect, in a possible implementation, a manner of obtaining the status information of the terminal device includes one or more of the following: receiving first indication information from the OTA server, where the first indication information indicates the identification result of the first user and/or the identification result of the second user; obtaining the identification result of the first user and/or the identification result of the second user based on use management information of the terminal device; obtaining the identification result of the first user and/or the identification result of the second user based on a sensing result of the terminal device; or obtaining the identification result of the first user and/or the identification result of the second user based on input information received by the terminal device.

With reference to the sixth aspect, in a possible implementation, the identification result of the first user includes that the first user exists in the terminal device, or the first user exists at a preset location of the terminal device; and the upgrade control unit is configured to send, by using the communication unit, second indication information to a first device associated with the first user in the terminal device, where the second indication information indicates to output the upgrade operation information on the first device.

With reference to the sixth aspect, in a possible implementation, the sending, by using the communication unit, second indication information to a first device associated with the first user in the terminal device includes: sending, by using the communication unit, the second indication information to the first device via a second device in the terminal device.

With reference to the sixth aspect, in a possible implementation, the identification result of the first user includes that the first user does not exist in the terminal device, or the first user exists in the terminal device and the first user is not at a preset location of the terminal device; and the upgrade control unit is configured to send the upgrade operation information to the first user by using the communication unit.

With reference to the sixth aspect, in a possible implementation, the identification result of the second user includes that the second user exists in the terminal; and the upgrade control unit is configured to send the upgrade operation information to the first user or the terminal device by using the communication unit.

According to a seventh aspect, an embodiment of this application provides a human machine interface HMI, including: a communication unit, configured to receive upgrade operation information; an output unit, configured to output the upgrade operation information; and an input unit, configured to obtain input information in response to the upgrade operation information, where the input information is used to authorize a second HMI to output the upgrade operation information. The communication unit is further configured to send output control information based on the input information, where the output control information indicates to output the upgrade operation information on the second HMI.

According to an eighth aspect, an embodiment of this application provides an intelligent terminal, including: a communication unit, configured to receive upgrade operation information of a terminal device from an OTA server or a first user, where the first user is an owner of the terminal device; an output unit, configured to output the upgrade operation information; and an input unit, configured to obtain input information in response to the upgrade operation information, where the input information is used to authorize another device other than the intelligent terminal to perform an upgrade operation of the terminal device. The communication unit is further configured to send operation control information to the OTA server or the terminal device based on the input information, where the operation control information indicates the another device to perform the upgrade operation of the terminal device. For example, the operation control information may be the input information, or the operation control information may be control information that indicates another device to perform an upgrade operation of the terminal device.

According to a ninth aspect, an embodiment of this application provides a communication apparatus. The communication apparatus includes: a communication interface, configured to communicate with another apparatus; and a processor, coupled to the communication interface, so that the communication apparatus performs the method according to any one of the first aspect and the possible implementations of the first aspect, or performs the method according to any one of the second aspect and the possible implementations of the second aspect, or performs the method according to any one of the third aspect and the possible implementations of the third aspect, or performs the method according to any one of the fourth aspect and the possible implementations of the fourth aspect.

According to a tenth aspect, an embodiment of this application provides a computer-readable storage medium. The computer-readable storage medium stores a computer program, and when the computer program is run on a computer, the computer is enabled to perform the method according to any one of the first aspect and the possible implementations of the first aspect, or perform the method according to any one of the second aspect and the possible implementations of the second aspect, or perform the method according to any one of the third aspect and the possible implementations of the third aspect, or perform the method according to any one of the fourth aspect and the possible implementations of the fourth aspect.

According to an eleventh aspect, an embodiment of this application provides a computer program product. The computer program product includes a computer program, and when the computer program is run on a computer, the computer is enabled to perform the method according to any one of the first aspect and the possible implementations of the first aspect, or perform the method according to any one of the second aspect and the possible implementations of the second aspect, or perform the method according to any one of the third aspect and the possible implementations of the third aspect, or perform the method according to any one of the fourth aspect and the possible implementations of the fourth aspect.

According to a twelfth aspect, an embodiment of this application provides a chip, including a processor. The processor is coupled to a memory, and is configured to execute a computer program or instructions stored in the memory. When the computer program or the instructions are executed, the method according to any one of the first aspect and the possible implementations of the first aspect is implemented, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed.

According to a thirteenth aspect, an embodiment of this application provides a terminal device. The terminal device may be configured to implement the method according to any one of the first aspect and the possible implementations of the first aspect, or perform the method according to any one of the second aspect and the possible implementations of the second aspect, or perform the method according to any one of the third aspect and the possible implementations of the third aspect, or perform the method according to any one of the fourth aspect and the possible implementations of the fourth aspect. For example, the terminal device includes but is not limited to: an intelligent transportation device (for example, a car, a ship, an unmanned aerial vehicle, a train, or a truck), an intelligent manufacturing device (for example, a robot, an industrial device, intelligent logistics, or a smart factory), or an intelligent terminal (for example, a mobile phone, a computer, a tablet computer, a palmtop computer, a desktop computer, a headset, an acoustic device, a wearable device, or an in-vehicle device).

According to a fourteenth aspect, an embodiment of this application provides a vehicle. The vehicle may include an OTA control unit, configured to implement the method according to any one of the second aspect and the possible implementations of the second aspect, or implement the method according to any one of the fourth aspect and the possible implementations of the fourth aspect.

In an optional implementation, the vehicle may include an HMI. The HMI may be configured to: output upgrade operation information of the vehicle, and/or obtain input information in response to the upgrade operation information.

According to a fifteenth aspect, an embodiment of this application provides a communication system. The communication system may include one or more of the following communication apparatuses: a communication apparatus that performs the method according to any one of the first aspect and the possible implementations of the first aspect; a communication apparatus that performs the method according to any one of the second aspect and the possible implementations of the second aspect; a communication apparatus that performs the method according to any one of the third aspect and the possible implementations of the third aspect; or a communication apparatus that performs the method according to any one of the fourth aspect and the possible implementations of the fourth aspect.

In this embodiment of this application, based on the implementations according to the foregoing aspects, further combinations may be performed to provide more implementations.

For technical effect that can be achieved in any one of the fifth aspect to the fifteenth aspect, refer to descriptions of technical effect that can be achieved in any one of the possible implementations of the first aspect. No repeated description is provided.

### BRIEF DESCRIPTION OF DRAWINGS

FIG. 1 is a diagram of a system architecture according to an embodiment of this application;
FIG. 2 is a schematic flowchart of an upgrade method according to an embodiment of this application;
FIG. 3 is a diagram of a system architecture applied to an internet of vehicles scenario according to an embodiment of this application;
FIG. 4A and FIG. 4B are a flowchart of a method applied to an internet of vehicles scenario according to an embodiment of this application;
FIG. 5A and FIG. 5B are a flowchart of a method applied to an internet of vehicles scenario according to an embodiment of this application;
FIG. 6A and FIG. 6B are a flowchart of a method applied to an internet of vehicles scenario according to an embodiment of this application;
FIG. 7 is a flowchart of a method applied to an internet of vehicles scenario according to an embodiment of this application;
FIG. 8 is a flowchart of a method applied to an internet of vehicles scenario according to an embodiment of this application;
FIG. 9 is a diagram of a communication apparatus according to an embodiment of this application;
FIG. 10 is a diagram of a communication apparatus according to an embodiment of this application;
FIG. 11 is a diagram of a communication apparatus according to an embodiment of this application; and
FIG. 12 is a diagram of a communication apparatus according to an embodiment of this application.

### DESCRIPTION OF EMBODIMENTS

Embodiments of this application provide an upgrade method. An upgrade operation of a terminal device is flexibly performed based on status information of the terminal device, to help flexibly implement OTA of an intelligent connected vehicle in a multi-user scenario, ensure driving experience of a vehicle user, and improve driving safety. The method and the apparatus are based on a same technical concept. The method and the apparatus have similar principles for resolving the problems. Therefore, for implementation of the apparatus and the method, refer to each other. Details of repeated parts are not described. In addition, in embodiments of this application, if there is no special description or logic conflict, terms and/or descriptions in embodiments are consistent and may be mutually referenced. Technical features in different embodiments may be combined to form a new embodiment based on an internal logical relationship between the technical features.

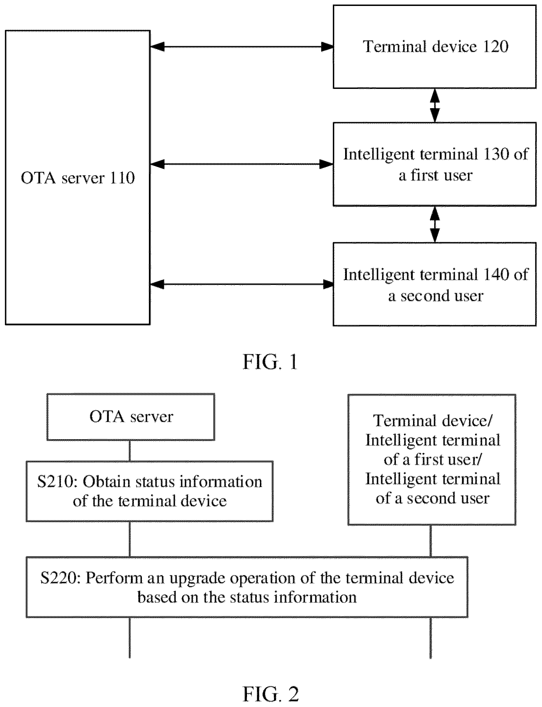

FIG. 1 is a diagram of a system architecture to which an embodiment of this application is applicable.

Refer to FIG. 1. An OTA server 110, a terminal device 120, and an intelligent terminal 130 of a first user (for example, an owner of the terminal device) are included in a scenario. In an optional implementation, an intelligent terminal 140 of a second user (for example, an authorized user of the terminal device) may also be included in the scenario. Any two of the OTA server 110, the terminal device 120, the intelligent terminal 130, or the intelligent terminal 140 may communicate with each other. A communication manner may be a wired manner or a wireless manner. This is not limited in this embodiment of this application.

The OTA server 110 may trigger an OTA upgrade procedure on a side of the terminal device 120.

For example, the OTA server 110 may obtain upgrade operation information of the terminal device 120 when knowing that software upgrade can be performed on the side of the terminal device 120, determine a specific implementation policy of an OTA upgrade process of the terminal device based on status information of the terminal device 120, and selectively send the upgrade operation information to any device of the terminal device 120, the intelligent terminal 130 of the first user, or the intelligent terminal 140 of the second user, so that the OTA server 110 and at least one of the terminal device 120, the intelligent terminal 130, or the intelligent terminal 140 cooperatively perform an upgrade operation of the terminal device 120.

For example, the upgrade operation information may include but is not limited to one or more of the following: an OTA activity content reminder, an OTA activity content confirmation, an OTA implementation start reminder, an OTA upgrade package download reminder, or OTA process (including processes such as downloading, installing, and activating an OTA file package) monitoring. After receiving the upgrade operation information, any one of the terminal device 120, the intelligent terminal 130 of the first user, and/or the intelligent terminal 140 of the second user may output the upgrade operation information, and a corresponding user on the device side may perform a subsequent related operation based on the upgrade operation information output by the device, to complete an upgrade operation of the terminal device 120. In addition, in a process of implementing OTA upgrade on the side of the terminal device 120, the first user or the second user may further learn of an upgrade progress by using the terminal device 120 or the intelligent terminal 130/140 of the first user or the second user.

For example, in a process of using the terminal device 120 by the first user, the terminal device may receive and output the upgrade operation information from the OTA server, and the first user may perform subsequent related processing based on the upgrade operation information, for example, confirm OTA activity content, confirm to start implementing OTA upgrade, and confirm to download an OTA upgrade package, to confirm that a related process of implementing OTA upgrade is performed on the terminal device 120. In addition, the first user may monitor an implementation progress of OTA upgrade.

For another example, the intelligent terminal 130 of the first user or the intelligent terminal 140 of the second user may receive and output the upgrade operation information from the OTA server by using an SMS message, an email, an application, or the like. The first user or the second user may perform subsequent related processing based on the upgrade operation information, for example, confirm OTA activity content, confirm to start implementing OTA upgrade, and confirm to download an OTA upgrade package, to remotely confirm that the terminal device 120 starts a related process of implementing OTA upgrade. In addition, the first user or the second user may monitor an implementation progress of OTA upgrade on the intelligent terminal of the first user or the second user.

Based on the system architecture shown in FIG. 1, embodiments of this application provide an upgrade method.

FIG. 2 is a schematic flowchart of an upgrade method according to an embodiment of this application. The method may be implemented collaboratively by the OTA server 110 and at least one of the terminal device 120, the intelligent terminal 130 of the first user, or the intelligent terminal 140 of the second user shown in FIG. 1. As shown in FIG. 2, the upgrade method may include the following steps.

S210: An OTA server obtains status information of a terminal device.

S220: The OTA server performs an upgrade operation of the terminal device based on the status information.

In this embodiment of this application, the status information of the terminal device may indicate a use status of the terminal device, and the status information may include but is not limited to an identification result of a first user and/or an identification result of a second user.

For example, the first user is an owner of the terminal device, and the second user is an authorized user of the terminal device. The identification result of the first user may include, for example, but is not limited to: whether the first user authorizes the OTA server to obtain the status information of the terminal device; how the first user authorizes the OTA server to obtain the status information of the terminal device; whether the first user authorizes the second user to use the terminal device; how the first user authorizes the second user to use the terminal device; an association relationship between the first user and the terminal device, for example, whether the first user is located in the terminal device, a specific location of the first user in the terminal device, and whether the first user is located at a preset location of the terminal device; or a location relationship between the first user and the second user. The identification result of the second user may include, for example, but is not limited to: whether the second user obtains use authorization of the terminal device; how the second user obtains use authorization of the terminal device; an association relationship between the second user and the terminal device, for example, function permission of the second user that is authorized to use the terminal device, time in which the second user is authorized to use the terminal device, whether the second user is located in the terminal device, a specific location of the second user in the terminal device, and whether the second user is located at a preset location of the terminal device; or a location relationship between the second user and the first user.

The identification result of the first user and the identification result of the second user are described herein by using an example, which does not constitute any limitation on the identification results. In another embodiment, any information that can be used to identify a relationship among the first user, the second user, and the terminal device can be used as the identification result, and may be used to assist the OTA server in determining, to flexibly implement an OTA upgrade procedure of the terminal device in a multi-user scenario. In different scenarios, the preset location of the terminal device may be understood differently. For example, when the terminal device is a vehicle in an internet of vehicles scenario, the preset location of the terminal device may be a preset location inside the terminal device, for example, a driver position. In a mobile service scenario (including a remote driving scenario), the preset location of the terminal device may be an external location associated with the terminal device, for example, a location that is outside the terminal device and at which the terminal device may be remotely controlled or monitored. This is not limited in this embodiment of this application.

In this embodiment of this application, when S210 is implemented, the status information of the terminal device may be obtained in a plurality of manners. For example, the obtaining manners may include one or more of the following.
(1) The OTA server obtains the status information of the terminal device based on use management information of the terminal device.

In this example, the use management information of the terminal device may be used to record all users of the terminal device, and permission of each user for the terminal device, for example, an authorized use function, authorized use time, authorized operation permission, and other information. The status information of the terminal device may be obtained based on the use management information.

Generally, the owner of the terminal device may have all rights to dispose of the terminal device, including all use permission and entire use time, may authorize other users to use some or all functions of the terminal device, and may authorize use time, operation permission, and the like of the terminal device to other users. The use management information may record use information of all users in an associated manner. For example, a user A* represents an owner of a terminal device α, a user B and a user C represent two authorized users of the terminal device α, and the use management information may be, for example, shown in Table 1.

**Table 1**

| Device identifier | User identifier | Authorized use functions | Authorized use time | Authorized operation permission |
|---|---|---|---|---|
| α | A* | All functions | All time periods | - |
| α | B | All functions | 2021.12.1 to 2021.12.30 | Yes |
| α | C | Functions 1 to 10 | All time periods | No |

In Table 1, α represents an identifier of the terminal device, A*, B, and C represent user identifiers; and * is an owner identifier and indicates the owner of the terminal device.

The information recorded in the second row in Table 1 indicates that the user A* is the owner of the terminal device α, the user A* has the use permission for all functions of the terminal device α, and the use time is all time periods (including a time period from a use start moment of the terminal device α to a use end moment of the terminal device α). The information recorded in the third row in Table 1 indicates that the user B is an authorized user of the terminal device α, and the user B is authorized to use all functions of the terminal device α in a time period from 2021.12. 1 to 2021.12. 30. The information recorded in the fourth row in Table 1 indicates that the user C is an authorized user of the terminal device α, and the user C is authorized to use some functions such as the functions 1 to 10 of the terminal device α in all time periods of the terminal device α.

In an optional implementation, the use management information may further include an "authorized operation permission" item, and the "authorized operation permission" item indicates whether the owner of the terminal device α authorizes operation permission for upgrade operation information of the terminal device to another authorized user. If record content of this item of the another authorized user is yes or another authorization mark, it indicates that the another authorized user is authorized. For example, in Table 1, the operation permission for the upgrade operation information of the terminal device is authorized to the user B. If record content of this item of the another authorized user is no or another unauthorized mark, it indicates that the another authorized user is not authorized. For example, in Table 1, the operation permission for the upgrade operation information of the terminal device is not authorized to the user C. It may be understood that, for the owner of the terminal device, record content of this item of the owner of the terminal device may be empty (for example, represented by using "-"), indicating default authorization. For example, in Table 1, the user A* may obtain the operation permission for the upgrade operation information of the terminal device by default after being bound to the terminal device.

It may be understood that the information recorded in Table 1 is merely an example instead of any limitation on the implementation of the use management information. The use management information may further record information about who uses the terminal device in a specific time period, for example, information recorded when the owner of the terminal device authorizes another user to use the terminal device, such as an electronic key issued by the owner of the terminal device to an authorized user, or information recorded when another user applies to the owner of the terminal device for using the terminal device, or the like. The use time recorded in the use management information may include past time, current time, and future time. That is, whenever the owner of the terminal device authorizes another user, related information may be recorded in the use management information, to implement convenient management for the terminal device based on the use management information. In addition, the foregoing table is only one of presentation manners of the use management information of the terminal device, and does not limit the use management information to present and store data in a form of a table.

The use management information may be stored in a memory on a terminal device side, or may be reported by the terminal device or the owner of the terminal device (for example, the first user) to a related server for storage. The first user may authorize permission to the OTA server to access the memory of the terminal device or the server, so that the OTA server may obtain the use management information, to obtain the status information of the terminal device.

In an optional implementation, the use management information of the terminal device may be stored in a local memory of the OTA server, or stored in another device that can be accessed by the OTA server. The OTA server may obtain the use management information of the terminal device by accessing the local memory of the OTA server or the another device, to obtain the status information of the terminal device based on the use management information, and determine, based on the status information, how to deliver the upgrade operation information of the terminal device.

The use management information shown in Table 1 is used as an example. If Table 1 includes only information in a row in which the user identifier A* is located, it indicates that the terminal device is used only by the owner A* of the terminal device, and is not authorized to another user for use. In this case, the OTA server may use A* as the identification result of the first user, and the status information of the terminal device may include the identification result of the first user. Alternatively, the OTA server may use "NONE (NONE)" as the identification result of the second user, and the status information of the terminal device may include the identification result of the second user: NONE. Alternatively, the OTA server may use A* as the identification result of the first user, and use NONE as the identification result of the second user, and the status information of the terminal device may include the identification result of the first user and the identification result of the second user. In this case, the OTA server may determine the terminal device as a receive end of the upgrade operation information, and send the upgrade operation information of the terminal device to the terminal device, so that a user (for example, the first user) on the terminal device side performs the upgrade operation of the terminal device based on the upgrade operation information received by the terminal device.

If Table 1 further includes information in a row in which the user identifier B or the user identifier C is located, it indicates that the terminal device is authorized to the user B or the user C other than the owner A of the terminal device for use, that is, the second user exists. In this case, the OTA server may use B or C as the identification result of the second user, and the status information of the terminal device may include the identification result of the second user. Alternatively, the OTA server may use A* as the identification result of the first user, and use B or C as the identification result of the second user, and the status information of the terminal device may include the identification result of the first user and the identification result of the second user. In this case, the OTA server may determine the first user as a receive end of the upgrade operation information, and send the upgrade operation information of the terminal device to the first user, so that the first user performs the upgrade operation of the terminal device based on the received upgrade operation information.

In an optional implementation, after obtaining the operation permission that is authorized by the first user to the second user for the upgrade operation information of the terminal device, the OTA server may also determine the second user as a receive end of the upgrade operation information, and send the upgrade operation information to the second user, so that the second user performs the upgrade operation of the terminal device based on the received upgrade operation information. In an example, the first user may authorize the operation permission for the upgrade operation information of the terminal device to the second user while authorizing use of the terminal device, where the authorized operation permission may be recorded by the OTA server in "authorized operation permission" in Table 1. In another example, that the first user authorizes the use of the terminal device and that the first user authorizes the operation permission for the upgrade operation information of the terminal device to the second user may be two mutually independent authorization operations. The first user may first authorize the use of the terminal device. The OTA server may record corresponding use management information. When the operation permission needs to be authorized, the first user may additionally authorize the operation permission for the upgrade operation information of the terminal device to the second user, and the OTA server may receive authorization confirmation information from the first user in real time, where the authorization confirmation information may indicate the first user to confirm to authorize the operation permission for the upgrade operation information of the terminal device to the second user. The OTA server may determine the authorized operation permission of the second user based on the authorization confirmation information and synchronously update the use management information of the terminal device. It should be noted that, in the foregoing examples of this application, the status information obtained based on the use management information may include the identification result of the first user and/or the identification result of the second user, and a presentation manner of the status information is not limited. Details are not described herein again.

(2) The OTA server receives first indication information from the terminal device, where the first indication information indicates the identification result of the first user and/or the identification result of the second user.

In this embodiment of this application, the terminal device may directly or indirectly sense the identification result of the first user and/or the identification result of the second user (by using a sensing component associated with the terminal device). In this example, the OTA server may communicate with the terminal device, and may obtain the identification result of the first user and/or the identification result of the second user based on an indication of the terminal device. It should be understood that the sensing of the terminal device described in this embodiment of this application includes sensing of the sensing component associated with the terminal device. The following does not distinguish and describe the sensing one by one.

For example, the first user may authorize use of the terminal device, and the terminal device may send the first indication information to the OTA server. The first indication information may indicate the second user authorized to use the terminal device. Therefore, the first indication information indicates the identification result of the second user. The identification result of the second user may include one or more of the following information: the second user, use authorization obtained by the second user for the terminal device, an authorized use function of the second user, authorized use time of the second user, or the like.

For another example, the terminal device may sense whether the first user exists in the terminal device or whether the first user exists at a preset location of the terminal device, and send the first indication information to the OTA server, where the first indication information may indicate that the first user exists in the terminal device or the first user exists at the preset location of the terminal device. Therefore, the first indication information indicates the identification result of the first user, and the identification result of the first user may include that the first user exists in the terminal device or the first user exists at the preset location of the terminal device.

Similar to the foregoing descriptions, the preset location of the terminal device may be understood differently in different scenarios. For example, when the terminal device is a vehicle in an internet of vehicles scenario, the preset location of the terminal device may be a preset location inside the terminal device, for example, a driver position. In this case, the vehicle may sense, by using a vehicle sensing system, whether the first user exists in the vehicle or whether the first user exists at the driver position of the vehicle. In a mobile service scenario (including a remote driving scenario), the preset location of the terminal device may be an external location associated with the terminal device, for example, a location that is outside the terminal device and at which the terminal device may be remotely controlled or monitored. The terminal device may communicate with an associated external sensing component (for example, a camera), and obtain a sensing result from the external sensing component, to determine whether the first user exists at the preset location. This is not limited in this embodiment of this application. For another example, the terminal device may sense whether the second user exists in the terminal device or whether the second user exists at a preset location of the terminal device, and send the first indication information to the OTA server, where the first indication information may indicate that the second user exists in the terminal device or the second user exists at the preset location of the terminal device. Therefore, the first indication information indicates the identification result of the second user, and the identification result of the second user may include that an authorized user (namely, the second user) exists in the terminal device or an authorized user (namely, the second user) exists at the preset location of the terminal device. Similar to the foregoing examples, according to different understandings of the preset location of the terminal device in different scenarios, the terminal device may also sense, in different manners, whether the second user exists in the terminal device or whether the second user exists at the preset location of the terminal device. Details are not described herein again.

For another example, the first user may authorize use of the terminal device, and simultaneously, the terminal device may sense whether the first user exists in the terminal device or whether the first user exists at a preset location of the terminal device. The terminal device may send the first indication information to the OTA server, where the first indication information may indicate the second user authorized to use the terminal device, and indicate that the first user exists in the terminal device or the first user exists at the preset location of the terminal device. Therefore, the first indication information indicates the identification result of the first user and the identification result of the second user. The identification result of the first user includes that the first user exists in the terminal device, or the first user exists at the preset location of the terminal device. The identification result of the second user includes one or more of the following information: the second user, use authorization obtained by the second user for the terminal device, an authorized use function of the second user, authorized use time of the second user, or the like.

Further, when S220 is implemented, the OTA server may perform determining based on the received first indication information, to determine how to deliver the upgrade operation information of the terminal device, so as to perform an upgrade operation of the terminal device.

(3) The OTA server receives second indication information from the first user, where the second indication information may indicate the identification result of the first user and/or the identification result of the second user.

In this example, the OTA server may communicate with the first user (for example, an intelligent terminal of the first user), and may obtain the identification result of the first user and/or the identification result of the second user based on an indication of the first user.

For example, the first user may authorize use of the terminal device by using the intelligent terminal of the first user, and the intelligent terminal may send the second indication information to the OTA server; or the first user may authorize use of the terminal device in another manner (for example, by using an electronic key, an email, or a written file), and may send the second indication information to the OTA server by using the terminal device (for example, by using a communication component that is included in the terminal device and that communicates with the outside) or the intelligent terminal of the first user. The second indication information may indicate the identification result of the second user, and the identification result of the second user may include one or more of the following information: the second user, use authorization obtained by the second user for the terminal device, an authorized use function of the second user, authorized use time of the second user, or the like.

For another example, the intelligent terminal of the first user may determine a location relationship between the first user and the terminal device by using a positioning technology; and the intelligent terminal may send the second indication information to the OTA server, or the first user may directly send the second indication information to the OTA server by using the intelligent terminal of the first user or by using the terminal device (for example, by using a communication component that is included in the terminal device and that communicates with the outside) based on the location relationship between the first user and the terminal device. The second indication information may indicate that the first user exists in the terminal device, or the first user does not exist in the terminal device, or the first user exists at a preset location of the terminal device, or the first user does not exist at a preset location of the terminal device. Therefore, the identification result of the first user may include: whether the first user exists in the terminal device, or whether the first user exists at the preset location of the terminal device. For the preset location of the terminal device, refer to the foregoing related descriptions. Details are not described herein again.

For another example, the second indication information from the first user may indicate the identification result of the first user and the identification result of the second user, where the identification result of the first user and the identification result of the second user may be obtained in a same manner or different manners, and may be obtained by using a combination of the foregoing manners, or may be obtained in another manner. The identification result of the first user and the identification result of the second user may be carried in same indication information, or may be carried in different indication information, and the indication information may be from a same device of the first user, or may be from different devices of the first user. A specific manner of obtaining the second indication information is not limited in this embodiment of this application.

It should be noted that the foregoing examples (1) to (3) are merely examples for obtaining the status information of the terminal device by the OTA server, but do not constitute any limitation. In another embodiment, the OTA server may further obtain the status information of the terminal device in another manner. This is not limited in this embodiment of this application.

In this embodiment of this application, when S220 is implemented, the OTA server may determine a receive end of the upgrade operation information of the terminal device based on the obtained status information, to deliver the upgrade operation information to the corresponding receive end, so as to perform an upgrade operation of the terminal device. A specific interaction process in S220 varies according to different cases indicated by the status information. For example:
(1) The identification result of the first user includes that the first user exists in the terminal device, or the first user exists at the preset location of the terminal device. In S220, the OTA server may send the upgrade operation information of the terminal device to the terminal device. Correspondingly, the first user on the terminal device side may perform a subsequent related operation based on the upgrade operation information, to complete an upgrade operation of the terminal device 120.
(2) The identification result of the first user includes that the first user does not exist in the terminal device, or the first user exists in the terminal device and the first user is not at the preset location of the terminal device. In S220, the OTA server may send the upgrade operation information of the terminal device to the first user. Correspondingly, the first user may perform a subsequent related operation based on the received upgrade operation information, to complete an upgrade operation of the terminal device 120.
(3) The identification result of the second user includes that the second user exists in the terminal device. In S220, the OTA server may send the upgrade operation information of the terminal device to the first user or the terminal device. That is, when the OTA server determines that another user other than the owner of the terminal device exists, the OTA server sends the upgrade operation information of the terminal device to the first user or the terminal device, to ensure use experience of the another user.

For ease of understanding, the following describes specific implementation details of embodiments of this application by using an example in which embodiments are applied to the internet of vehicles scenario.

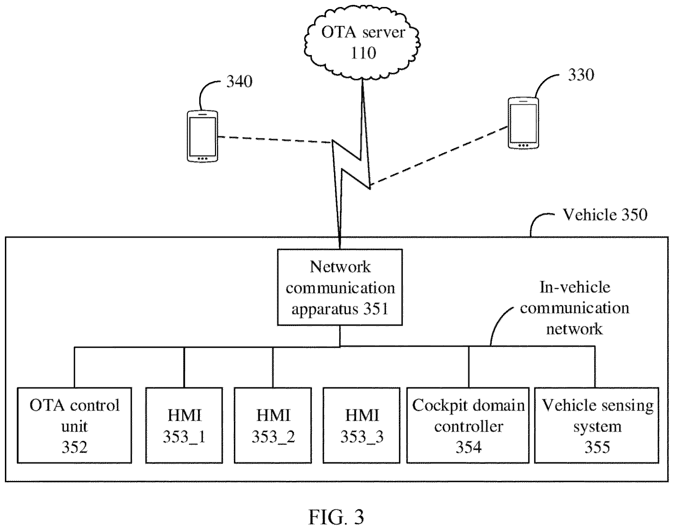

FIG. 3 is a diagram of a system architecture applied to an internet of vehicles scenario according to an embodiment of this application. For example, the terminal device 120 in FIG. 1 is a vehicle 350 in FIG. 3, and the intelligent terminal 130/140 in FIG. 1 is a smartphone 330/340 in FIG. 3. Refer to FIG. 3. In this scenario, the OTA server 110 may communicate with the vehicle 350 and the smartphone 330 of an owner of the vehicle or the smartphone 340 of an authorized user of the vehicle through a wireless network, to transmit upgrade operation information of the vehicle 350 and other information associated with an upgrade operation, so as to implement an OTA upgrade procedure of the vehicle 350.

The OTA server 110 may trigger the OTA upgrade procedure on a side of the vehicle 350. In a process of implementing OTA upgrade, the OTA server 110 may obtain status information of the vehicle 350, and determine, based on the status information, a receive end of the OTA upgrade operation information of the vehicle 350, for example, the receive end is any device of the vehicle 350, the smartphone 330 of the owner of the vehicle, or the smartphone 340 of the authorized user of the vehicle. The OTA server 110 may deliver the upgrade operation information to the determined receive end, to trigger the OTA upgrade procedure of the vehicle 350. In addition, the OTA server 110 may further monitor an OTA upgrade process of the vehicle 350.

The vehicle 350 may include an ECU, for example, a network communication apparatus 351, an OTA control unit 352, at least one human machine interface HMI 353 (for example, HMI 353_1, HMI 353_2, and HMI 353_3), a cockpit domain controller 354, and a vehicle sensing system 355, and an in-vehicle communication network (for example, a CAN bus) configured to implement internal communication of the vehicle.

The network communication apparatus 351 may serve as a communication bridge between external devices such as the OTA server 110, the smartphone 330, and the smartphone 340 and an internal ECU of the vehicle 350, to implement capabilities such as sending, receiving, and forwarding information associated with OTA upgrade. Inside the vehicle 350, the network communication apparatus 351 may implement information transmission with each ECU of the vehicle 350 through, for example, the in-vehicle communication network like the CAN bus. In this embodiment of this application, the network communication apparatus 351 may support a wireless communication manner or a wired communication manner. This is not limited in this embodiment of this application.

The OTA control unit 352 may serve as a determining unit for implementing OTA upgrade control in the vehicle 350, and may perform determining comprehensively based on one or more of the following information: for example, the obtained upgrade operation information, the status information of the vehicle 350, related information obtained from the at least one human machine interface HMI 353, related information obtained from the cockpit domain controller 354, related information obtained from the vehicle sensing system 355, or related information obtained from another ECU, to obtain a determining result and control output of the upgrade operation information based on the determining result. Correspondingly, the owner of the vehicle and the authorized vehicle of the vehicle 350 may complete the upgrade operation of the vehicle 350 based on the output upgrade operation information.

The OTA control unit 352 and the network communication apparatus 351 may be different unit modules, or may be a same unit module, for example, a T-BOX, or may integrate functional modules such as a GPS, an external communication interface, an ECU, a microcontroller, a mobile communication unit, and a memory. The T-Box may be internally connected to an in-vehicle bus (namely, the internal communication network of the vehicle, for example, the CAN bus), and externally may implement, by using a cloud platform, information exchange between a vehicle terminal, a handheld device, an RSU, and a public network that implements communication by using V2V, V2R, V2H, V2S, or the like. Alternatively, the OTA control unit 352 may be a newly added hardware module in the vehicle. Related determining logic or an algorithm may be configured in the hardware module, and the hardware module may serve as an ECU in the vehicle 350 to transfer information to another ECU through the internal communication network of the vehicle, to implement the upgrade method in this embodiment of this application. A product form of the OTA control unit 352 is not limited in this embodiment of this application.

The vehicle sensing system 355 may include, for example, a sensing component like a camera. The vehicle sensing system 355 may obtain a sensing result like an image about a person in the vehicle through sensing, and provide the sensing result for the cockpit domain controller 354.

The cockpit domain controller 354 may be connected to the vehicle sensing system 355, receive the sensing result from the vehicle sensing system 355, determine, based on the sensing result, information: whether the person in the vehicle includes the owner of the vehicle, a specific location of the owner of the vehicle in the vehicle 350, and the like, and provide the information for the OTA control unit 352 for performing determining comprehensively.

In another implementation, the vehicle sensing system 355 may alternatively directly provide the sensing result for the OTA control unit 352, so that the OTA control unit 352 performs determining comprehensively.

The at least one human machine interface HMI 353 is an input/output device in the vehicle 350. The at least one human machine interface HMI 353 may communicate with the OTA control unit 352 through the in-vehicle communication network, may provide an OTA operation interface, and may be configured to output the upgrade operation information, receive operation input information, and the like. The at least one human machine interface HMI 353 may have a respective communication identifier and communication address, and may be configured to receive to-be-output information, or provide obtained input information for another module. For example, the at least one human machine interface HMI 353 may include an in-vehicle device like an in-vehicle display (for example, a touchscreen), and may also include an external associated device like a smartphone or a tablet computer located in the vehicle 350. This is not limited in this embodiment of this application.

The smartphone 330 and the smartphone 340 may communicate with the OTA server 110 and the network communication apparatus of the vehicle 350 through a mobile network. When the OTA server 110 determines that the upgrade operation information of the vehicle 350 can be directly sent to the smartphone 330 or the smartphone 340, the OTA server 110 may directly send the upgrade operation information to the smartphone 330 or the smartphone 340. The smartphone 330 or the smartphone 340 may also receive the upgrade operation information forwarded by the network communication apparatus of the vehicle 350. For example, an OTA application may be installed and run on sides of the smartphone 330 and the smartphone 340. The owner of the vehicle or the authorized user of the vehicle may control a running status of the vehicle 350 by using an application run on a smartphone of the owner of the vehicle or the authorized user of the vehicle, and may control the OTA upgrade process of the vehicle 350 by communicating with the OTA server 110. In a process of implementing the upgrade method in embodiments of this application, at least one of the at least one human machine interface HMI 353, the smartphone 330, and the smartphone 340 may serve as an output device to output the upgrade operation information of the terminal device. The output device may be a device that finally outputs the upgrade operation information, or may be an output device that outputs the upgrade operation information in an upgrade process. An output manner and an output occasion of the upgrade operation information is not limited in embodiments of this application. For ease of differentiation, in embodiments of this application, the output device that is used to output the upgrade operation information of the terminal device and that is involved in different cases may also be referred to as a first device, a second device, or the like. The following provides descriptions with reference to different examples. Details are not described herein.

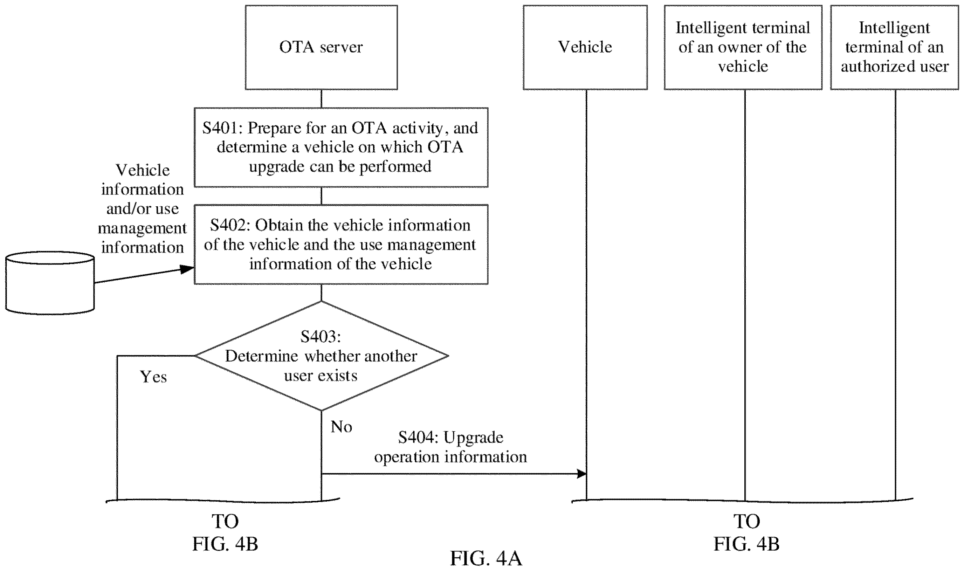

Based on the system architecture shown in FIG. 3, in combination with different manners of obtaining the status information of the vehicle and different cases indicated by the status information, by using an example in which a vehicle in a manual driving mode is used as a terminal device, a specific implementation procedure of the upgrade method in embodiments of this application may include Example 1 to Example 5. The following separately describes the examples with reference to the accompanying drawings such as FIG. 4A to FIG. 8. It may be understood that steps shown in FIG. 4A to FIG. 8 are merely examples of steps that may be included in the upgrade method in embodiments of this application, and do not constitute any limitation. Specific execution sequences of the steps in the examples may be adjusted mutually. In some embodiments, a new embodiment may be formed based on a combination of technical features in different embodiments described with reference to FIG. 4A to FIG. 8.

Example 1: An OTA server may obtain use management information of the vehicle, determine a receive end of upgrade operation information of the vehicle based on the use management information, and send the upgrade operation information of the vehicle to the receive end.

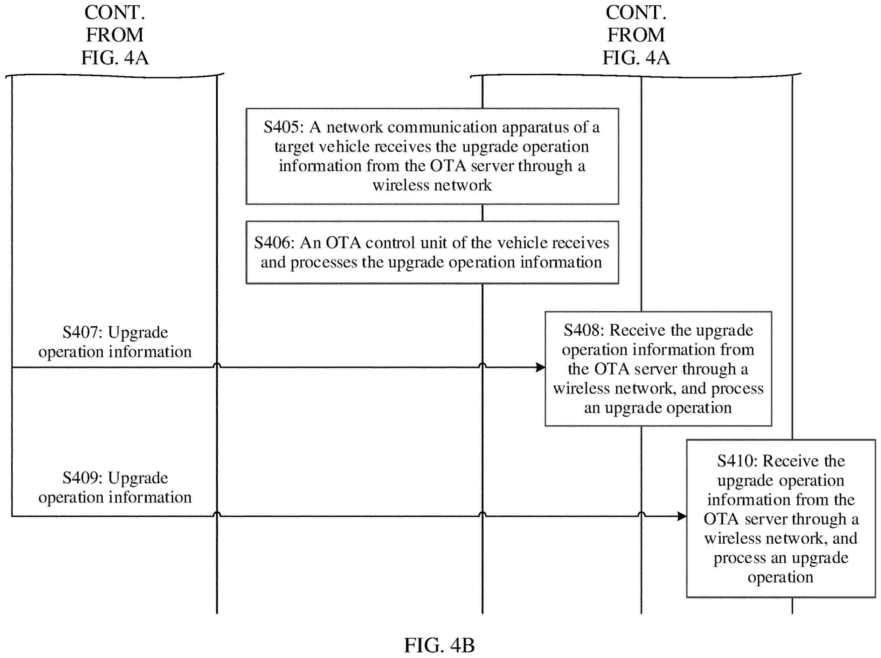

As shown in FIG. 4A and FIG. 4B, in Example 1, the upgrade method may include the following steps.

S401: The OTA server prepares for an OTA activity, for example, prepares an OTA upgrade package and formulates an OTA-related message, and determines a vehicle on which OTA upgrade can be performed. The vehicle on which OTA upgrade can be performed may include all vehicles on which to-be-upgraded software is installed, or any vehicle selected from all the vehicles. A manner of determining the vehicle is not limited in this embodiment of this application.

S402: The OTA server obtains vehicle information of the vehicle and use management information of the vehicle.

The vehicle information and the use management information may be stored in the OTA server or a server that can be accessed by the OTA server. For example, the vehicle information may include one or more of the following: an identifier of the vehicle, for example, a vehicle frame number or a vehicle identification number (vehicle identification number, VIN); a communication address of the vehicle; an owner of the vehicle (or referred to as a vehicle owner); and a contact method like a mobile phone number or an email address of the owner of the vehicle. The use management information may include, for example, one or more of the following: an identifier of the vehicle/a communication address of the vehicle, a user, an authorized use function, authorized use time, authorized operation permission (optional), or the like.

S403: The OTA server obtains the status information of the vehicle based on the use management information, and determines, based on the status information, whether the vehicle has another user, namely, a second user, other than a first user (namely, the owner of the vehicle).

If a determining result is no, S404 is performed; or if a determining result is yes, S407 or S409 may be performed. When the determining result is yes, it needs to be considered whether operation permission for the upgrade operation information is authorized to an authorized user of a terminal device. If yes, S409 may be performed. If no, S407 may be performed.

The use management information shown in Table 1 is used as an example. If Table 1 includes only the information in the row in which the user identifier A* is located, it indicates that the terminal device is used only by the owner A* of the terminal device, and is not authorized to another user for use. In this case, the determining result obtained in S403 is no, and S404 is performed. If Table 1 includes the information in the row in which the user identifier C is located, it indicates that the terminal device is authorized to the user C other than the owner A* of the terminal device for use, and the operation permission for the upgrade operation information of the terminal device is not authorized to the user C. In this case, the determining result obtained in S403 is yes, another authorized user does not have the operation permission, and S407 is performed. If Table 1 includes the information in the row in which the user identifier B is located, it indicates that the terminal device is authorized to the user B other than the owner A* of the terminal device, and the operation permission for the upgrade operation information of the terminal device is authorized to the user B. In this case, the determining result obtained in S403 is yes, another authorized user has the operation permission, and S409 is performed.

S404: The OTA server sends the upgrade operation information of the vehicle to the vehicle.

S405: A network communication apparatus of the vehicle receives, for example, through a wireless network, the upgrade operation information from the OTA server, and sends the upgrade operation information to an OTA control unit of the vehicle.

S406: The OTA control unit of the vehicle receives the upgrade operation information, and performs subsequent related processing on the upgrade operation information. The OTA control unit may perform subsequent related processing on the upgrade operation information based on related determining logic or an algorithm configured by the OTA control unit. The following describes a determining process of the OTA control unit with reference to Example 3 and Example 4. Details are not described herein.

S407: The OTA server sends the upgrade operation information of the vehicle to the first user based on a specific contact method of the first user. The contact method may include, for example, but is not limited to, any one of an SMS message, an email, an application, and the like.

S408: An intelligent terminal of the first user receives, for example, through a wireless network, the upgrade operation information from the OTA server, and processes an upgrade operation.

S409: The OTA server sends the upgrade operation information of the vehicle to the second user based on a specific contact method of the second user. In another optional implementation, S409 may be a same step as S404. In other words, S404 may be performed after S403 at any case except for a case of performing S407 when it is determined that the second user exists and the second user does not have the operation permission. The first user performs the upgrade operation of the vehicle as much as possible by sending the upgrade operation information to the first user.

S410: An intelligent terminal of the second user receives, for example, through a wireless network, the upgrade operation information from the OTA server, and processes an upgrade operation.

In an optional implementation, in S404, S407, or S409, the OTA server may further send third indication information. The third indication information may indicate an identification result of the first user and/or an identification result of the second user, so that the vehicle, the first user, and the second user perform determining based on the third indication information. The third indication information and the upgrade operation information may be carried in a same message, or may be carried in different messages. This is not limited in this embodiment of this application. The following provides detailed descriptions with reference to other examples. Details are not described herein.

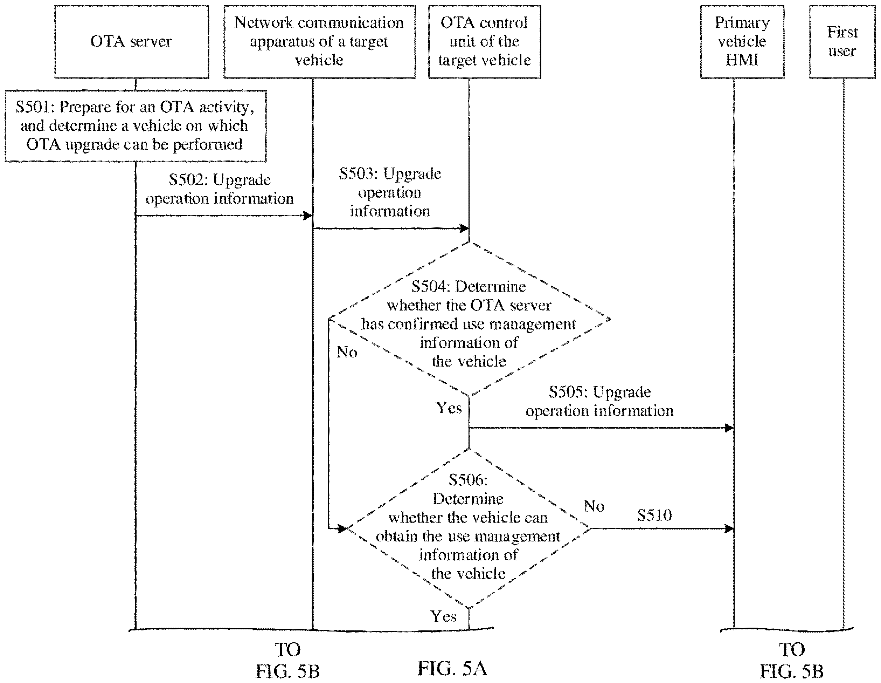

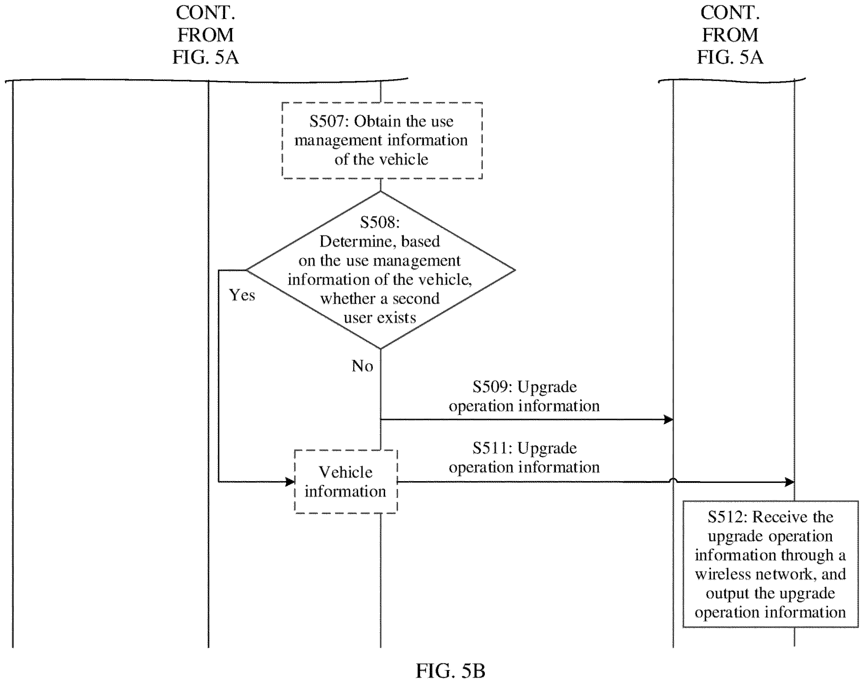

Example 2: When an OTA server cannot obtain use management information of the terminal device, the OTA server may send upgrade operation information of the vehicle to the vehicle based on vehicle information. Further, an OTA control unit on the vehicle side determines a receive end of the upgrade operation information of the vehicle based on the use management information of the vehicle and the like, and sends the upgrade operation information of the vehicle to the receive end, or determines an output end of the upgrade operation information of the vehicle, and outputs the upgrade operation information at the output end. Steps implemented on the vehicle side and included in FIG. 5A and FIG. 5B are also applicable to subsequent implementation after the OTA server delivers the upgrade operation information of the vehicle to the vehicle based on S404 shown in FIG. 4A and FIG. 4B.

As shown in FIG. 5A and FIG. 5B, in Example 2, the upgrade method may include the following steps.

S501: The OTA server prepares for an OTA activity, for example, prepares an OTA upgrade package and formulates an OTA-related message, and determines a vehicle on which OTA upgrade can be performed. For specific implementation details, refer to the description of S401. Details are not described herein again.

S502: When the OTA server cannot obtain the use management information of the terminal device, the OTA server sends the upgrade operation information to the vehicle based on the vehicle information of the vehicle.

The vehicle information may be stored in the OTA server or a server that can be accessed by the OTA server. For example, the vehicle information may include an identifier of the vehicle, for example, a vehicle frame number or a VIN; a communication address of the vehicle; a first user; and a contact method like a mobile phone number or an email address of the first user. During implementation of S502, the OTA server may send the upgrade operation information to the vehicle based on, for example, the VIN or the communication address of the vehicle.

In an optional implementation, the OTA server may alternatively send third indication information (not shown in FIG. 5A and FIG. 5B) to the vehicle. The third indication information may indicate an identification result of the first user and/or an identification result of a second user. For example, the third indication information may indicate that the OTA server does not obtain the use management information of the vehicle, that is, whether the second user exists is not determined based on the use management information. Alternatively, if S502 includes S403 and S404 shown in FIG. 4A and FIG. 4B, it indicates that the OTA server has confirmed the use management information of the vehicle, and the OTA server may further send third indication information to the vehicle. The third indication information may indicate that the OTA server has determined, based on the use management information of the vehicle, whether the second user exists. During specific implementation, the upgrade operation information and the third indication information may be carried in a same message. For example, the OTA server may add a flag bit to the message that carries the upgrade operation information. The flag bit may carry the third indication information. The third indication information may indicate whether the OTA server has confirmed the use management information of the vehicle. An implementation of this indication information is not limited in this embodiment of this application.

S503: A network communication apparatus of the vehicle receives, for example, through a wireless network, the upgrade operation information from the OTA server, and sends the upgrade operation information to an OTA control unit.

S504 (optional): The OTA control unit determines whether the OTA server has confirmed the use management information of the vehicle; and performs S505 if a determining result is yes; or performs S506 if a determining result is no.

In this step, an example in which a flag bit that carries the third indication information is added to the message that carries the upgrade operation information is used. For example, different values of the flag bit may be used to carry different indication information. For example, if the flag bit is 1, it indicates that the OTA server has confirmed the use management information of the vehicle; or if the flag bit is 0, it indicates that the OTA server has not confirmed the use management information of the vehicle. In S504, the OTA control unit may perform determining based on a specific value of the flag bit.

S505: The OTA control unit sends the upgrade operation information to a primary vehicle HMI.

The primary vehicle HMI described herein may be, for example, an HMI associated with a driver position of the vehicle. The primary vehicle HMI may output the upgrade operation information, and a user at a location (for example, the driver position) associated with the primary vehicle HMI may perform an OTA upgrade operation of the vehicle based on the upgrade operation information.

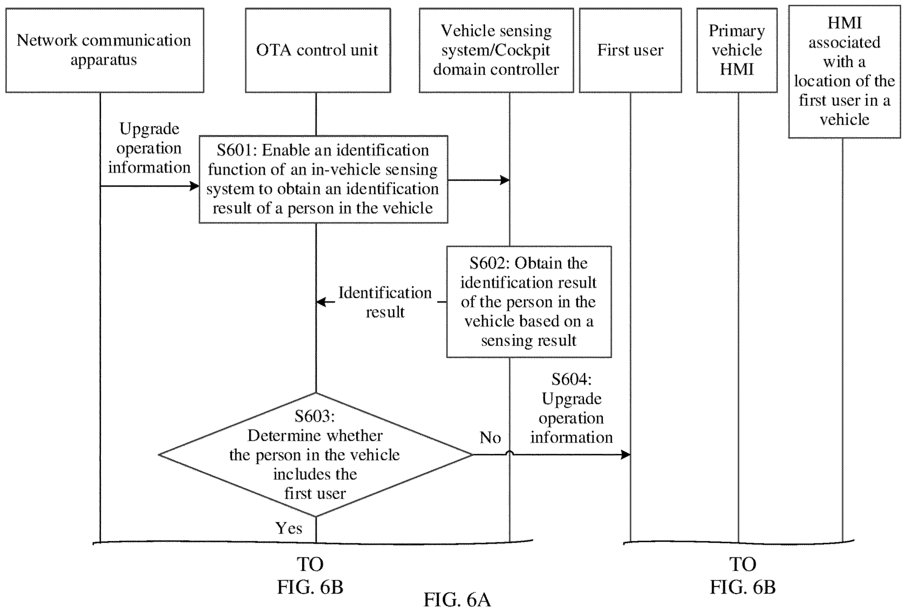

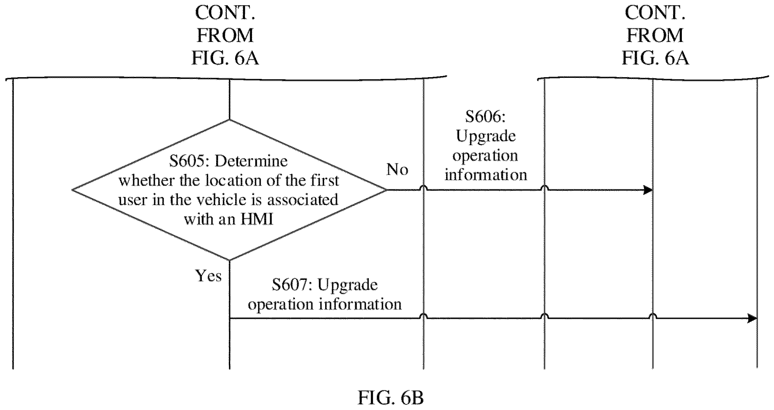

Alternatively, in S505, the vehicle may be configured to perform a function of a solution B. In S505, the OTA control unit may further perform, based on preset settings, the solution B shown in FIG. 6A and FIG. 6B. The following describes the solution B with reference to FIG. 6A and FIG. 6B and embodiments. Details are not described herein again.

S506 (optional): The OTA control unit determines whether the vehicle can obtain the use management information of the vehicle; performs S507 if a determining result is yes; or performs S510 if a determining result is no.

It may be understood that the use management information may be stored in an internal storage device of the vehicle or in a specific storage device that can be accessed by the vehicle. This is not limited in this embodiment of this application.

S507 (optional): The OTA control unit obtains the use management information of the vehicle.

S508: The OTA control unit determines, based on the use management information of the vehicle, whether the second user exists; and performs S509 if a determining result is no; or performs S511 if a determining result is yes.

S509/S510: The OTA control unit sends the upgrade operation information to the primary vehicle HMI. The primary vehicle HMI can output the upgrade operation information. The user at the location associated with the primary vehicle HMI may perform an OTA upgrade operation of the vehicle based on the upgrade operation information. Alternatively, the vehicle may be configured to perform a function of a solution B. In S510, the OTA control unit may further perform the solution B based on preset settings, as shown in FIG. 6A and FIG. 6B.

S511: The OTA control unit obtains the vehicle information, and sends the upgrade operation information to the first user based on the vehicle information. The vehicle information may indicate the contact method of the first user. Alternatively, the vehicle may be configured to perform a function of a solution B. In S511, the OTA control unit may further perform the solution B based on preset settings, as shown in FIG. 6A and FIG. 6B.

During specific implementation, the OTA control unit may send the upgrade operation information to the first user based on a user contact method that is associated with the vehicle when the first user is registered, for example, by using an SMS message, an email, or an application. A transmission manner of the upgrade operation information is not limited in this embodiment of this application.

S512: An intelligent terminal of the first user receives the upgrade operation information from a network communication apparatus of the vehicle through a wireless network, and outputs the upgrade operation information. Correspondingly, the first user remotely determines, on a smartphone side based on the upgrade operation information, to start, on the vehicle, a related procedure for implementing OTA upgrade.

It may be understood that steps shown in dashed boxes in FIG. 5A and FIG. 5B are optional steps, indicating that related determining logic of the OTA control unit may include the foregoing optional steps, and a specific determining process of the upgrade method is not limited. In some embodiments, the OTA control unit may selectively perform the foregoing steps, for example, may directly perform S508 without performing S504 to S507.

Example 3: Based on Example 1 and Example 2, the vehicle is an intelligent connected vehicle, and may carry a vehicle sensing system, at least one HMI, and the like. After an OTA server delivers upgrade operation information of the vehicle to the vehicle, an OTA control unit obtains an identification result of a first user and/or an identification result of a second user by using the vehicle sensing system, the at least one HMI, and the like, and determines how to output the upgrade operation information, to perform an upgrade operation of the vehicle.

For example, if the identification result of the first user includes that the first user exists in the terminal device, or the first user exists at a preset location of the terminal device, the OTA control unit may send indication information to a first device associated with the first user in the terminal device, where the indication information indicates to output the upgrade operation information of the vehicle on the first device. Alternatively, the OTA control unit may send the indication information to the first device via a second device in the terminal device. For another example, if the identification result of the first user includes that the first user does not exist in the terminal device, or the first user exists in the terminal device and the first user is not at a preset location of the terminal device, the OTA control unit may send the upgrade operation information of the vehicle to the first user. For another example, the identification result of the second user may include that the second user exists in the terminal, and the OTA control unit may send the upgrade operation information to the first user or the vehicle.

An example of performing determining by using the vehicle sensing system is used. For example, the vehicle sensing system may include a camera. The OTA control unit may identify a face of a person in the vehicle by using the camera, and perform determining based on a sensing result. For example, the OTA control unit determines, based on a face image captured by the camera, whether the first user exists in the vehicle or whether the first user exists at the preset location of the vehicle. Alternatively, for example, the vehicle sensing system may include a microphone. The OTA control unit may perform voiceprint recognition and determining based on voice information of a person in the vehicle that is collected by using the microphone during vehicle startup or vehicle running, and determine, based on whether recognized voiceprint information is consistent with voiceprint information of the first user stored in the vehicle, whether the first user exists in the vehicle. For another example, in another manner, the OTA control unit may determine, based on a password, a startup instruction, or the like that is input by a user of the vehicle at a current moment when the user starts the vehicle, an attribute corresponding to the current user of the vehicle, for example, whether the vehicle is started by using an electronic key of a vehicle owner or an electronic key of an authorized user, to determine whether the first user and/or the second user exist in the vehicle. Based on the foregoing determining result, the OTA control unit may obtain the status information of the vehicle, to perform determining based on the status information of the vehicle, so as to implement the upgrade method in this embodiment of this application.

An example in which a person in the vehicle is identified by using the vehicle sensing system is used. As shown in FIG. 6A and FIG. 6B, in the solution B described in Example 2, the upgrade method may include the following steps.

S601: The OTA control unit enables a sensing function of the vehicle sensing system in response to the upgrade operation information from the network communication apparatus of the vehicle, to obtain an identification result of the person in the vehicle.

In this step, the upgrade operation information may come from the OTA server, and the OTA control unit may receive the upgrade operation information from the OTA server by using the network communication apparatus of the vehicle. It may be understood that, FIG. 6A and FIG. 6B merely show an example that the upgrade operation information is forwarded by the network communication apparatus, and does not limit routing information of the upgrade operation information.

S602: The vehicle sensing system/cockpit domain controller obtains the identification result of the person in the vehicle based on a sensing result, and feeds back the identification result of the person in the vehicle to the OTA control unit.

In this embodiment of this application, the vehicle sensing system may include, for example, but is not limited to, a sensing component like the camera or the microphone configured to obtain sensing feature information. For example, the camera may be configured to obtain an image of the person in the vehicle, for example, the face image; and the microphone may be configured to collect voice data of the person in the vehicle. The cockpit domain controller may communicate with the vehicle sensing system, and may identify the sensing result obtained by the vehicle sensing system to obtain the identification result of the person in the vehicle, for example, identify the face image to obtain face information, iris information, and the like of the person in the vehicle, or perform voiceprint recognition on the voice data to obtain the voiceprint information of the person in the vehicle.

The OTA control unit may communicate with the vehicle sensing system. In S601, the OTA control unit enables the sensing function of the vehicle sensing system. For example, the OTA control unit may send the startup instruction to the vehicle sensing system, to enable the sensing function of the vehicle sensing system. In S602, the OTA control unit may directly obtain the sensing result from the vehicle sensing system as the identification result of the person in the vehicle. Alternatively, the OTA control unit may communicate with the cockpit domain controller. In S601, the OTA control unit enables the sensing function of the vehicle sensing system. For example, the OTA control unit may send an obtaining instruction of the identification result to the cockpit domain controller, and the cockpit domain controller may send the startup instruction to the vehicle sensing system in response to the obtaining instruction, to enable the sensing function of the vehicle sensing system and obtain the sensing result from the vehicle sensing system. The cockpit domain controller identifies the sensing result obtained from the vehicle sensing system to obtain the identification result of the person in the vehicle. In S602, the OTA control unit may obtain the identification result of the person in the vehicle from the cockpit domain controller. A manner of obtaining the identification result is not limited in this embodiment of this application.

For example, the identification result of the person in the vehicle may include, for example, information, such as a passenger identifier, a vehicle owner mark (used to mark whether the passenger is the vehicle owner, for example, "*" described above), and a passenger location, that is obtained by identifying all passengers in the vehicle.

It may be understood that, in this embodiment of this application, sensing feature information (including face information, iris information, voiceprint information, and the like) of an owner of the vehicle and/or an authorized user of the vehicle may be stored in a memory inside the vehicle or another device that can be accessed by the vehicle. In an identification process, the vehicle sensing system/cockpit domain controller may compare a sensing result obtained in real time with stored sensing feature information, to determine an identification result of a person in the vehicle. A specific implementation process of the identification process is not limited in this embodiment of this application. Details are not described herein again.

S603: The OTA control unit determines whether the person in the vehicle includes the first user, namely, the owner of the vehicle; and performs S604 if a determining result is no; or performs S605 if a determining result is yes.

For example, the OTA control unit may determine, based on whether the identification result obtained in S602 includes the vehicle owner mark, whether the passenger includes the first user.

S604: The OTA control unit sends the upgrade operation information to the first user.

For example, the OTA control unit may send the upgrade operation information to a smartphone of the first user by using an SMS message, an email, an application, or the like.

S605: The OTA control unit determines whether a location of the first user in the vehicle is associated with an HMI; and performs S606 if a determining result is no; or performs S607 if a determining result is yes.

S606: The OTA control unit sends the upgrade operation information to a primary vehicle HMI.

For example, the primary vehicle HMI may be an HMI associated with a driver position of the vehicle. In another optional implementation of this step, the OTA control unit may alternatively send the upgrade operation information to a smartphone of the vehicle owner.

S607: The OTA control unit sends the upgrade operation information to the HMI associated with the location of the first user in the vehicle.

In other words, based on a sensing result of a vehicle sensor, the OTA control unit may perform determining based on an association relationship between the first user and the vehicle. For example, if the first user does not exist in the vehicle, the OTA control unit may send the upgrade operation information to the intelligent terminal of the first user. If the first user exists in the vehicle, the OTA control unit may send, based on the location of the first user in the vehicle, the upgrade operation information to the HMI associated with the location of the first user. For example, if the first user is at the driver position, the OTA control unit may send the upgrade operation information to the primary vehicle HMI. For another example, if the owner of the vehicle is located at a location that is not the driver position, for example, a front passenger position or a rear-row location, the OTA control unit may send the upgrade operation information to an HMI associated with the front passenger position or the rear-row location at which the first user is located.

It should be noted that, in an optional implementation, in the upgrade method shown in FIG. 6A and FIG. 6B, execution sequences of S605 and S606 and S603 to S604 may be exchanged, that is, a determining process of S605 is performed first, and then a determining process of S603 is performed. A corresponding receive end of the upgrade operation information is determined based on a determining result.

Therefore, according to the method example shown in FIG. 6A and FIG. 6B, the OTA control unit may identify the person in the vehicle by using a sensing function of the intelligent connected vehicle, to flexibly send, based on an identification result, to-be-processed upgrade operation information to a corresponding HMI for output, so that an appropriate person performs subsequent related processing on the output upgrade operation information, to complete an OTA upgrade operation of the vehicle. According to the method, it can be avoided that the upgrade operation information is directly pushed to the primary vehicle HMI, to avoid unnecessary trouble and driving burden caused to a user who is not the vehicle owner and who currently uses the vehicle. This improves driving experience of the user who is not the vehicle owner.

Example 4: In an OTA process (including determining OTA content, downloading an OTA upgrade package, installing the OTA upgrade package, activating the OTA upgrade package, and the like), a plurality of persons may perform collaborative operations. Based on the examples shown in FIG. 4A to FIG. 6B, after the upgrade operation information is delivered to the vehicle and output by a first device in the vehicle, the first device may further obtain input information in response to the upgrade operation information, and the OTA control unit may forward the upgrade operation information to a second device in the vehicle based on the input information. In this way, the upgrade operation information is forwarded and output between different devices in the vehicle, so that an appropriate person performs subsequent related processing on the upgrade operation information, to ensure driving safety of the vehicle and improve user experience.

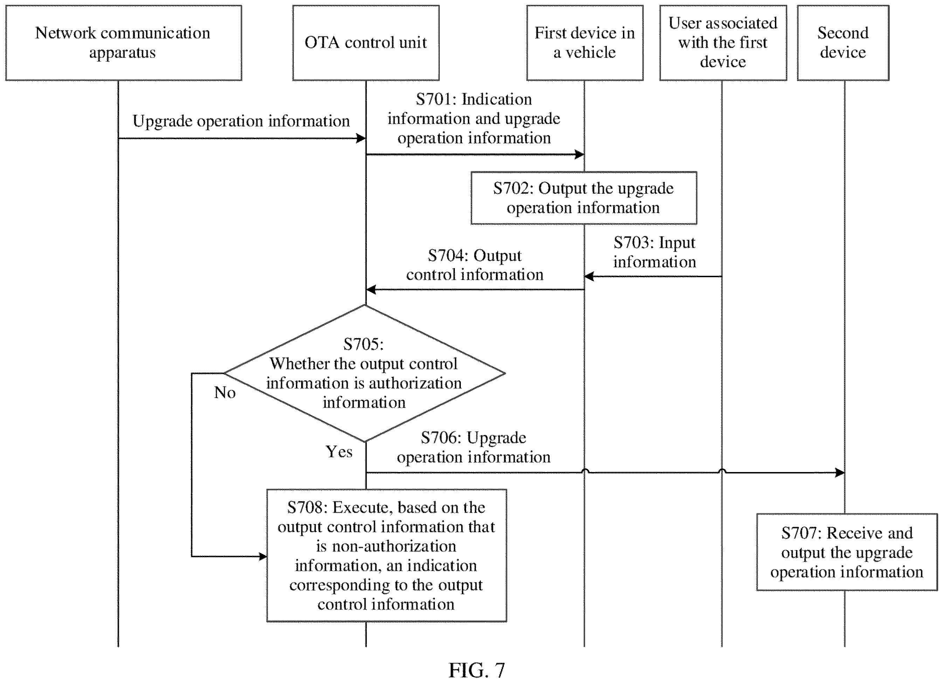

As shown in FIG. 7, the upgrade method may include the following steps.

S701: An OTA control unit receives upgrade operation information of a vehicle from a network communication apparatus, and sends indication information and upgrade operation information to a first device in the vehicle, where the indication information indicates to output the upgrade operation information on the first device.

For example, the first device may be a primary vehicle HMI of the vehicle. Alternatively, the first device may be a device associated with an owner of the vehicle, for example, an HMI associated with a location of the owner of the vehicle in the vehicle. Alternatively, the first device may be a smartphone of an owner of the vehicle.

S702: The first device outputs the upgrade operation information.

S703: The first device receives input information in response to the upgrade operation information.

S704: The first device sends output control information to the OTA control unit based on the input information. Correspondingly, the OTA control unit may receive the output control information.

For example, the input information may be provided by a user associated with the first device. The input information may include, for example, authorization information, used to authorize a second device in the vehicle to output the upgrade operation information. Alternatively, the input information may include a processing instruction for the upgrade operation information, for example, confirming OTA content, or agreeing or disagreeing. For example, the output control information may be the upgrade operation information. Alternatively, the output control information may be control information that indicates to output the upgrade operation information on the second device.

S705: The OTA control unit determines whether the output control information is authorization information that is used to authorize operation permission for the upgrade operation information of the vehicle; and performs S706 if a determining result is yes; or performs S708 if a determining result is no.

S706: The OTA control unit sends the upgrade operation information to the second device in the vehicle.

S707: The second device may receive and output the upgrade operation information.

The second device may be an HMI other than the first device in the vehicle. For example, the first device may be the primary vehicle HMI. At a current moment, an authorized user of the vehicle is located at the driver position of the vehicle, the owner of the vehicle is located at the front passenger position or a rear-row location inside the vehicle, and the second device may be an HMI associated with the front passenger position or the rear-row location or a smartphone of the owner of the vehicle. Alternatively, for example, the first device may be the primary vehicle HMI. At a current moment, the owner of the vehicle is located at the driver position of the vehicle, an authorized user of the vehicle is located at the front passenger position or a rear-row location, and the second device may be an HMI associated with the front passenger position or the rear-row location. Alternatively, for example, at a current moment, the owner of the vehicle may be located at the front passenger position, the first device may be an HMI associated with the front passenger position of the vehicle, and the second device may be an HMI associated with the driver position or a rear-row location.

S708: The OTA control unit executes, based on the output control information that is the authorization information, an indication corresponding to the output control information.

For example, the output control information may be "no upgrade", and the OTA control unit may ignore the upgrade operation information.

Therefore, according to the method example shown in FIG. 7, the OTA control unit may forward and output the upgrade operation information of the vehicle between different HMIs by using a function that the intelligent connected vehicle has a plurality of HMIs, so that a person having the operation permission or located at a relatively safe location (for example, the front passenger position or the rear-row location of the vehicle) performs subsequent related processing on the output upgrade operation information, to complete an OTA upgrade operation of the vehicle. According to the method, forwarding and authorization operations may be performed between the plurality of HMIs, to avoid unnecessary trouble and driving burden caused to a driver who is driving the vehicle, and improve driving experience.

Example 5: In an OTA process (including determining OTA content, downloading an OTA upgrade package, installing the OTA upgrade package, activating the OTA upgrade package, and the like), a plurality of persons may perform collaborative operations. Based on the examples shown in FIG. 4A to FIG. 6B, after the upgrade operation information of the vehicle is delivered to the intelligent terminal of the owner of the vehicle, the intelligent terminal may serve as the foregoing first device, and the owner of the vehicle may authorize operation permission for the upgrade operation information of the vehicle to another device (for example, the foregoing second device) other than the intelligent terminal by using the intelligent terminal. The another device may be a device inside the vehicle, or may be a device outside the vehicle, including but not limited to a device of an authorized user of the vehicle, another intelligent terminal of the owner of the vehicle, and a vehicle. This is not limited in this embodiment of this application.

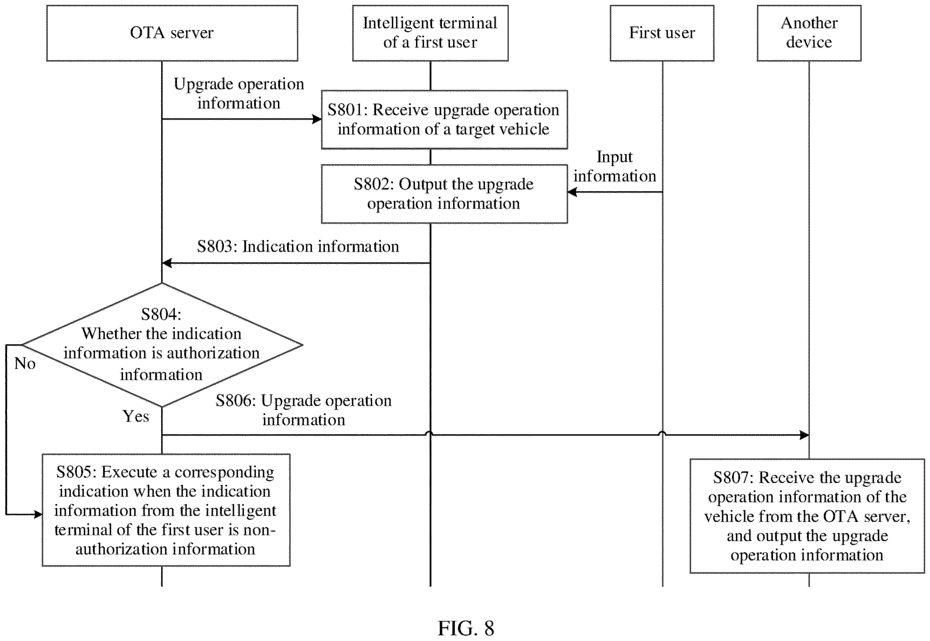

As shown in FIG. 8, the upgrade method may include the following steps.

S801: An intelligent terminal of a first user receives upgrade operation information of a vehicle from an OTA server.

S802. The intelligent terminal of the first user outputs the upgrade operation information, and receives input information of the first user.

For example, the input information may include authorization information used to authorize operation permission for the upgrade operation information of the vehicle to another device. The input information may further include information such as a communication address of the another device.

S803: The intelligent terminal of the first user sends indication information to the OTA server based on the input information. Correspondingly, the OTA server receives the indication information from the intelligent terminal of the first user.

For example, when the input information includes the authorization information, the indication information may indicate information such as a communication address of another authorized device. For example, the input information may indicate the authorized user who the operation permission for the upgrade operation information of the vehicle is authorized to, and the indication information may include a contact method like a mobile phone number or an email of the authorized user. For another example, the input information may indicate a communication address of another intelligent terminal of an owner of the vehicle, and the like.

S804: The OTA server determines whether the indication information from the intelligent terminal of the first user is the authorization information used to authorize the operation permission for the upgrade operation information of the vehicle to the another device; and performs S805 if a determining result is no; or performs S806 if a determining result is yes.

S805: The OTA server executes a corresponding indication when the indication information from the intelligent terminal of the first user is non-authorization information.

S806: The OTA server sends the upgrade operation information of the vehicle to the another device when the indication information from the intelligent terminal of the first user is the authorization information.

For example, the another device may include an intelligent terminal of a second user. In S806, the OTA server may send the upgrade operation information to the intelligent terminal of the second user. Alternatively, the another device may include a vehicle. In S806, the OTA server may send the upgrade operation information to the vehicle. The another device is not limited in this embodiment of this application.

S807: The another device receives the upgrade operation information of the vehicle from the OTA server, and outputs the upgrade operation information. Correspondingly, a user on the another device side may determine, based on the received upgrade operation information, to perform subsequent related processing, to complete an OTA upgrade operation of the vehicle.

Therefore, according to the method example shown in FIG. 8, after receiving the upgrade operation information of the vehicle by using the intelligent terminal of the first user, the first user may authorize, through an authorization operation, the operation permission for the OTA upgrade operation information of the vehicle to another device that is more suitable for performing the OTA upgrade operation of the vehicle, for example, a vehicle or an intelligent terminal of the second user who is currently using the vehicle and who better understands a real-time status of the vehicle, to implement the OTA upgrade operation of the vehicle in a timely manner while ensuring driving safety of the vehicle.

In this case, different implementation processes of the upgrade method in embodiments of this application in different cases have been described with reference to the method flowcharts in FIG. 4A to FIG. 8 by using an example in which the terminal device is the vehicle. In the method, in the intelligent connected vehicle scenario and the multi-user scenario, a user who is more suitable for performing the upgrade operation of the vehicle may be determined based on the status information of the vehicle, so that the upgrade operation information is flexibly delivered to a device associated with the user, and the user controls a specific implementation process of the upgrade operation. This can not only improve driving experience of the user on the vehicle, but also ensure driving safety of the vehicle and timeliness of performing OTA upgrade on the vehicle.

An embodiment of this application further provides a communication apparatus, configured to perform the methods performed by the OTA server, the OTA control unit, the first device, the terminal device, and the like in the foregoing method embodiments. For related features, refer to the foregoing method embodiments. Details are not described herein again.

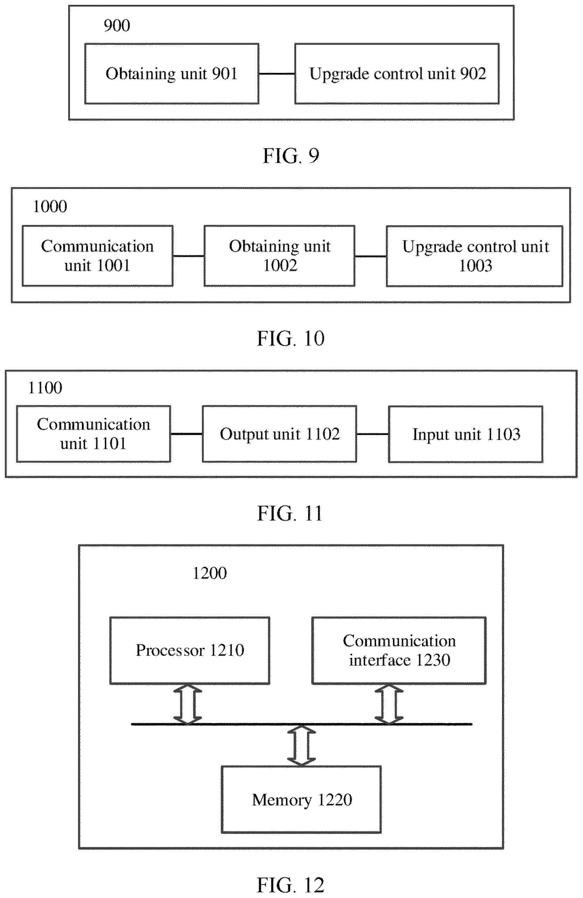

As shown in FIG. 9, the communication apparatus 900 may include: an obtaining unit 901, configured to obtain status information of a terminal device, where the status information includes an identification result of a first user and/or an identification result of a second user, the first user is an owner of the terminal device, and the second user is an authorized user of the terminal device; and an upgrade control unit 902, configured to perform an upgrade operation of the terminal device based on the status information. For a specific implementation, refer to the method steps implemented by the OTA server in the foregoing method embodiments. Details are not described herein again.

As shown in FIG. 10, the communication apparatus 1000 may include: a communication unit 1001, configured to receive upgrade operation information of a terminal device from an OTA server; an obtaining unit 1002, configured to obtain status information of the terminal device, where the status information includes an identification result of a first user and/or an identification result of a second user, the first user is an owner of the terminal device, and the second user is an authorized user of the terminal device; and an upgrade control unit 1003, configured to perform an upgrade operation of the terminal device based on the status information and the upgrade operation information. For a specific implementation, refer to the method steps implemented by the OTA control unit in the foregoing method embodiments. Details are not described herein again.

It should be noted that in an example shown in FIG. 10, the obtaining unit 1002 and the communication unit 1001 may be a same unit or different units. This is not limited in this embodiment of this application. For example, if the obtaining unit 1002 obtains the status information of the terminal device from a local database, the obtaining unit 1002 and the communication unit 1001 are the same unit; or if the obtaining unit 1002 obtains the status information from an apparatus other than the communication apparatus 1000, the obtaining unit 1002 and the communication unit 1001 are different units.

As shown in FIG. 11, the communication apparatus 1100 may include: a communication unit 1101, configured to receive upgrade operation information; an output unit 1102, configured to output the upgrade operation information; and an input unit 1103, configured to obtain input information in response to the upgrade operation information, where the input information is used to authorize a second HMI to output the upgrade operation information. The communication unit 1101 is further configured to send output control information based on the input information, where the output control information indicates to output the upgrade operation information on the second HMI. For a specific implementation, refer to the method steps implemented by the first device in the foregoing method embodiments. Details are not described herein again.

Alternatively, as shown in FIG. 11, the communication apparatus 1100 may include: a communication unit 1101, configured to receive upgrade operation information of a terminal device from an OTA server or a first user, where the first user is an owner of the terminal device; an output unit 1102, configured to output the upgrade operation information; and an input unit 1103, configured to obtain input information in response to the upgrade operation information, where the input information is used to authorize another device other than an intelligent terminal to perform an upgrade operation of the terminal device. The communication unit is further configured to send operation control information to the OTA server or the terminal device based on the input information, where the operation control information indicates another device to perform the upgrade operation of the terminal device. For a specific implementation, refer to the method steps implemented by the terminal device or the vehicle in the foregoing method embodiments. Details are not described herein again.

It should be understood that division of the units in the foregoing apparatus is merely logical function division. During actual implementation, all or some of the units may be integrated into one physical entity, or may be physically separated. In addition, the units in the apparatus may be implemented in a form of invoking software by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a central processing unit (Central Processing Unit, CPU) or a microprocessor, and the memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the units are implemented by designing a logical relationship between elements in the circuit. For another example, in another implementation, the hardware circuit may be implemented by using a programmable logic device (programmable logic device, PLD), for example, a field programmable gate array (Field Programmable Gate Array, FPGA) may include a large quantity of logic gate circuits, and a connection relationship between the logic gate circuits is configured by using a configuration file, to implement the functions of some or all of the units. All of the units of the apparatus may be implemented in the form of invoking software by a processor or in the form of a hardware circuit, or some of the units are implemented in the form of invoking software by the processor, and the remaining units are implemented in the form of a hardware circuit.

In this embodiment of this application, the processor is a circuit having a signal processing capability. In an implementation, the processor may be a circuit having an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function by using a logical relationship of the hardware circuit. The logical relationship of the hardware circuit is fixed or may be reconstructed. For example, the processor is a hardware circuit, for example, the FPGA, implemented by using the ASIC or the PLD. In the reconfigurable hardware circuit, a process in which the processor loads the configuration document to implement hardware circuit configuration may be understood as a process in which the processor loads the instructions to implement the functions of some or all of the units. In addition, the circuit may be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that the units in the apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units in the apparatus may be integrated, or the units in the apparatus may be independently implemented. In one implementation, these units are integrated and implemented in a form of a system-on-a-chip (system-on-a-chip, SoC). The SOC may include at least one processor, configured to implement any one of the foregoing methods or implement functions of the units of the apparatus. Types of the at least one processor may be different, for example, including a CPU and an FPGA, a CPU and an artificial intelligence processor, a CPU and a GPU, and the like.

In a simple embodiment, a person skilled in the art may figure out that the communication apparatus in the foregoing embodiments may be in a form shown in FIG. 12.

An apparatus 1200 shown in FIG. 12 includes at least one processor 1210 and a communication interface 1230. In an optional design, the apparatus may further include a memory 1220.

A specific connection medium between the processor 1210 and the memory 1220 is not limited in this embodiment of this application.

In the apparatus shown in FIG. 12, when communicating with another device, the processor 1210 may perform data transmission through the communication interface 1230.

When the communication apparatus is in the form shown in FIG. 12, the processor 1210 in FIG. 12 may invoke computer-executable instructions stored in the memory 1220, so that the apparatus 1200 can perform any one of the foregoing method embodiments.

An embodiment of this application further relates to a chip system. The chip system includes a processor, configured to invoke a computer program or computer instructions stored in a memory, so that the processor performs the method in any one of the foregoing embodiments.

In a possible implementation, the processor may be coupled to the memory through an interface.

In a possible implementation, the chip system may further directly include the memory, and the memory stores the computer program or the computer instructions.

For example, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

An embodiment of this application further relates to a processor. The processor is configured to invoke a computer program or computer instructions stored in a memory, so that the processor performs the method in any one of the foregoing embodiments.

For example, in this embodiment of this application, the processor is an integrated circuit chip and has a signal processing capability. For example, the processor may be an FPGA, may be a general-purpose processor, a DSP, an ASIC or another programmable logic device, a discrete gate or a transistor logic device, or a discrete hardware component, or may be a system chip (system-on-a-chip, SoC), or may be a CPU, or may be a network processor (network processor, NP), or may be a microcontroller unit (microcontroller unit, MCU), or may be a PLD or another integrated chip, and may implement or perform the methods, steps, and logical block diagrams disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It should be understood that embodiments of this application may be provided as a method, a system, or a computer program product.

In a possible implementation, an embodiment of this application provides a computer-readable storage medium. The computer-readable storage medium stores program code, and when the program code is run on a computer, the computer is enabled to perform the foregoing method embodiments.

In a possible implementation, an embodiment of this application provides a computer program product. When the computer program product is run on a computer, the computer is enabled to perform the foregoing method embodiments.

Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of protection defined by the claims of this application and their equivalent technologies. In embodiments of this application, if there is no special description or logic conflict, terms and/or descriptions in different embodiments are consistent and may be mutually referenced. Technical features in different embodiments may be combined to form a new embodiment based on an internal logical relationship between the technical features.

## Claims

1. An upgrade method, wherein the method comprises:
obtaining status information of a terminal device, wherein the status information comprises an identification result of a first user and/or an identification result of a second user, the first user is an owner of the terminal device, and the second user is an authorized user of the terminal device; and
performing an upgrade operation of the terminal device based on the status information.

2. The method according to claim 1, wherein a manner of obtaining the status information of the terminal device comprises one or more of the following:
obtaining the status information based on use management information of the terminal device;
receiving first indication information from the terminal device, wherein the first indication information indicates the identification result of the first user and/or the identification result of the second user; or
receiving second indication information from the first user, wherein the second indication information indicates the identification result of the first user and/or the identification result of the second user.

3. The method according to claim 1 or 2, wherein the identification result of the first user comprises that the first user exists in the terminal device, or the first user exists at a preset location of the terminal device; and the performing an upgrade operation of the terminal device based on the status information comprises:
sending upgrade operation information of the terminal device to the terminal device.

4. The method according to claim 1 or 2, wherein the identification result of the first user comprises that the first user does not exist in the terminal device, or the first user exists in the terminal device and the first user is not at a preset location of the terminal device; and the performing an upgrade operation of the terminal device based on the status information comprises:
sending upgrade operation information of the terminal device to the first user.

5. The method according to claim 1 or 2, wherein the identification result of the second user comprises that the second user exists in the terminal device; and the performing an upgrade operation of the terminal device based on the status information comprises:
sending upgrade operation information of the terminal device to the first user or the terminal device.

6. The method according to any one of claims 3 to 5, further comprising:
sending third indication information to the terminal device, wherein the third indication information indicates the identification result of the first user and/or the identification result of the second user.

7. An upgrade method, comprising:
receiving upgrade operation information of a terminal device from an OTA server;
obtaining status information of the terminal device, wherein the status information comprises an identification result of a first user and/or an identification result of a second user, the first user is an owner of the terminal device, and the second user is an authorized user of the terminal device; and
performing an upgrade operation of the terminal device based on the status information and the upgrade operation information.

8. The method according to claim 7, wherein a manner of obtaining the status information of the terminal device comprises one or more of the following:
receiving first indication information from the OTA server, wherein the first indication information indicates the identification result of the first user and/or the identification result of the second user;
obtaining the identification result of the first user and/or the identification result of the second user based on use management information of the terminal device;
obtaining the identification result of the first user and/or the identification result of the second user based on a sensing result of the terminal device; or
obtaining the identification result of the first user and/or the identification result of the second user based on input information received by the terminal device.

9. The method according to claim 7 or 8, wherein the identification result of the first user comprises that the first user exists in the terminal device, or the first user exists at a preset location of the terminal device; and the performing an upgrade operation of the terminal device based on the status information and the upgrade operation information comprises:
sending second indication information to a first device associated with the first user in the terminal device, wherein the second indication information indicates to output the upgrade operation information on the first device.

10. The method according to claim 9, wherein the sending second indication information to a first device associated with the first user in the terminal device comprises:
sending the second indication information to the first device via a second device in the terminal device.

11. The method according to claim 7 or 8, wherein the identification result of the first user comprises that the first user does not exist in the terminal device, or the first user exists in the terminal device and the first user is not at a preset location of the terminal device; and the performing an upgrade operation of the terminal device based on the status information and the upgrade operation information comprises:
sending the upgrade operation information to the first user.

12. The method according to claim 7 or 8, wherein the identification result of the second user comprises that the second user exists in the terminal; and the performing an upgrade operation of the terminal device based on the status information and the upgrade operation information comprises:
sending the upgrade operation information to the first user or the terminal device.

13. An upgrade method, applied to a first human machine interface HMI, wherein the method comprises:
receiving upgrade operation information;
outputting the upgrade operation information;
obtaining input information in response to the upgrade operation information, wherein the input information is used to authorize a second HMI to output the upgrade operation information; and
sending output control information based on the input information, wherein the output control information indicates to output the upgrade operation information on the second HMI.

14. An upgrade method, applied to an intelligent terminal of a first user, wherein the first user is an owner of a terminal device, and the method comprises:
receiving upgrade operation information from an OTA server or the terminal device;
outputting the upgrade operation information;
obtaining input information in response to the upgrade operation information, wherein the input information is used to authorize another device other than the intelligent terminal to perform an upgrade operation of the terminal device; and
sending operation control information to the OTA server or the terminal device based on the input information, wherein the operation control information indicates the another device to perform the upgrade operation of the terminal device.

15. A communication apparatus, comprising:
an obtaining unit, configured to obtain status information of a terminal device, wherein the status information comprises an identification result of a first user and/or an identification result of a second user, the first user is an owner of the terminal device, and the second user is an authorized user of the terminal device; and
an upgrade control unit, configured to perform an upgrade operation of the terminal device based on the status information.

16. The apparatus according to claim 15, wherein a manner of obtaining the status information of the terminal device by the obtaining unit comprises one or more of the following:
obtaining the status information based on use management information of the terminal device;
receiving first indication information from the terminal device by using a communication unit, wherein the first indication information indicates the identification result of the first user and/or the identification result of the second user; or
receiving second indication information from the first user by using a communication unit, wherein the second indication information indicates the identification result of the first user and/or the identification result of the second user.

17. The apparatus according to claim 15 or 16, wherein the identification result of the first user comprises that the first user exists in the terminal device, or the first user exists at a preset location of the terminal device; and the upgrade control unit is configured to:
send upgrade operation information of the terminal device to the terminal device by using the communication unit.

18. A communication apparatus, comprising:
a communication unit, configured to receive upgrade operation information of a terminal device from an OTA server;
an obtaining unit, configured to obtain status information of the terminal device, wherein the status information comprises an identification result of a first user and/or an identification result of a second user, the first user is an owner of the terminal device, and the second user is an authorized user of the terminal device; and
an upgrade control unit, configured to perform an upgrade operation of the terminal device based on the status information and the upgrade operation information.

19. The apparatus according to claim 18, wherein a manner of obtaining the status information of the terminal device by the obtaining unit comprises one or more of the following:
receiving first indication information from the OTA server, wherein the first indication information indicates the identification result of the first user and/or the identification result of the second user;
obtaining the identification result of the first user and/or the identification result of the second user based on use management information of the terminal device;
obtaining the identification result of the first user and/or the identification result of the second user based on a sensing result of the terminal device; or
obtaining the identification result of the first user and/or the identification result of the second user based on input information received by the terminal device.

20. The apparatus according to claim 18 or 19, wherein the identification result of the first user comprises that the first user exists in the terminal device, or the first user exists at a preset location of the terminal device; and the upgrade control unit is configured to:
send, by using the communication unit, second indication information to a first device associated with the first user in the terminal device, wherein the second indication information indicates to output the upgrade operation information on the first device.

21. The apparatus according to claim 20, wherein the sending, by using the communication unit, second indication information to a first device associated with the first user in the terminal device comprises:
sending, by using the communication unit, the second indication information to the first device via a second device in the terminal device.

22. A human machine interface HMI, comprising:
a communication unit, configured to receive upgrade operation information;
an output unit, configured to output the upgrade operation information; and
an input unit, configured to obtain input information in response to the upgrade operation information, wherein the input information is used to authorize a second HMI to output the upgrade operation information, wherein
the communication unit is further configured to send output control information based on the input information, wherein the output control information indicates to output the upgrade operation information on the second HMI.

23. An intelligent terminal, comprising:
a communication unit, configured to receive upgrade operation information of a terminal device from an OTA server or a first user, wherein the first user is an owner of the terminal device;
an output unit, configured to output the upgrade operation information; and
an input unit, configured to obtain input information in response to the upgrade operation information, wherein the input information is used to authorize another device other than the intelligent terminal to perform an upgrade operation of the terminal device, wherein
the communication unit is further configured to send operation control information to the OTA server or the terminal device based on the input information, wherein the operation control information indicates the another device to perform the upgrade operation of the terminal device.

24. A communication apparatus, wherein the communication apparatus comprises:
a communication interface, configured to communicate with another apparatus; and
a processor, coupled to the communication interface, so that the communication apparatus performs the method according to any one of claims 1 to 6 or claims 7 to 12, or according to claim 13 or 14.

25. A computer-readable storage medium, wherein the computer-readable storage medium stores a computer program, and when the computer program is run on a computer, the computer is enabled to perform the method according to any one of claims 1 to 6 or claims 7 to 12, or according to claim 13 or 14.

26. A computer program product, wherein the computer program product comprises a computer program, and when the computer program is run on a computer, the computer is enabled to perform the method according to any one of claims 1 to 6 or claims 7 to 12, or according to claim 13 or 14.

27. A chip, comprising a processor, wherein the processor is coupled to a memory, and is configured to execute a computer program or instructions stored in the memory, and when the computer program or the instructions are executed, the method according to any one of claims 1 to 6 or claims 7 to 12, or according to claim 13 or 14 is implemented.

28. A vehicle, comprising an OTA control unit configured to implement the method according to any one of claims 7 to 12 or according to claim 14.

29. The vehicle according to claim 28, comprising an HMI configured to: output upgrade operation information of the vehicle, and/or obtain input information in response to the upgrade operation information.

30. A communication system, comprising one or more of the following communication apparatuses:
a communication apparatus configured to implement the method according to any one of claims 1 to 6;
a communication apparatus configured to implement the method according to any one of claims 7 to 12;
a communication apparatus configured to implement the method according to claim 13; or
a communication apparatus configured to implement the method according to claim 14.
